# EUROPEAN PATENT APPLICATION

(11) **EP 4 349 473 A1**
(43) Date of publication of application: **10.04.2024**
(21) Application number: 22811604.2
(22) Date of filing: 24.05.2022
(51) Int. Cl.: B01F 35/80, H01M 4/04, B01F 35/83, B01F 35/71, B01F 35/20

(54) **SMART GRANULAR RAW MATERIAL CONVEYANCE SYSTEM AND SMART GRANULAR RAW MATERIAL CONVEYANCE METHOD**

(30) Priority: 25.05.2021 KR 20210067117
(71) Applicant: Techwin Co., Ltd., Cheongju-si, Chungcheongbuk-do 28580 (KR)
(72) Inventor: LEE, Sang Hong, Cheongju-si Chungcheongbuk-do 28661 (KR); JUNG, In Seok, Cheongju-si Chungcheongbuk-do 28582 (KR); CHOI, Eui Jip, Cheongju-si Chungcheongbuk-do 28340 (KR); KWON, Tai Yeon, Cheongju-si Chungcheongbuk-do 28342 (KR); LIM, Kyung Seob, Daejeon 34173 (KR)
(74) Representative: Berggren Oy
(86) International application number: PCT/KR2022/007340
(87) International publication number: WO 2022/250411

(57) **Abstract**

The present invention relates to a smart granular raw material conveyance system and a smart granular raw material conveyance method, wherein, when granular materials in powder form are conveyed along a conveyance line, the precisely metered granular materials are smoothly passed through a vertical pipe vertically installed in the conveyance line, and the granular materials are prevented from remaining or stagnating in the vertical pipe. The smart granular raw material conveyance system comprises at least one of: a first conveyance unit that conveys the granular materials in an amount corresponding to a first conveyance amount; a second conveyance unit that is spaced apart from the first conveyance unit and conveys the granular materials in an amount corresponding to a second conveyance amount equal to or different from the first amount; or a third conveyance unit that is spaced apart from the first conveyance unit and the second conveyance unit, and conveys the granular materials in an amount corresponding to a third conveyance amount equal to or less than the first amount or the second amount.

## Description

### [Technical Field]

The present invention relates to a smart granular raw material conveyance system and a smart granular raw material conveyance method, and more particularly, to a smart granular raw material conveyance system and a smart granular raw material conveyance method for smoothly passing a precisely-metered granular material in a vertical pipe that is vertically installed in the conveyance line and preventing the granular material from remaining or stagnating in the vertical pipe when a granular material in the form of powder is conveyed along a conveyance line.

### [Background Art]

In recent years, interest in energy storage technology has been increasing.

In general, as the field of application expands to home appliances such as mobile phones, camcorders, laptops, and desktop computers, and further to the energy of electric vehicles, efforts for research and development of electrochemical devices are becoming more and more specific.

Among various electrochemical devices, aqueous electrolyte-based lithium secondary batteries and capacitors capable of being applied to fields requiring high output characteristics are attracting attention.

These electrochemical devices generally include a positive electrode, a negative electrode, and a separator interposed between the positive electrode and the negative electrode. At this time, the positive electrode and the negative electrode are generally manufactured by a method of forming an electrode active material layer by applying an electrode active material slurry containing an electrode active material, a polymer binder, and a solvent dissolving the polymer binder for uniform mixing of the electrode active material to a surface of a current collector.

The electrode active material slurry may further include a conductive material to improve electrical conductivity of the electrode. Meanwhile, in order to form an excellent electrode, a dispersant for uniformly dispersing at least one of the electrode active material and the conductive material may be further included. This is because the shape of the electrode changes according to the degree of dispersion of the electrode active material and the conductive material, and the performance of the battery also changes accordingly.

Here, for the active material in the form of powder, when the active material is conveyed from an input hopper to a storage hopper disposed higher than the input hopper, a vertical pipe has to be formed in a conveyance line.

However, when the active material is conveyed according to a suction conveyance method in the related art, since the active material remains in the vertical pipe even after the suction conveying is completed, there is a problem in that the vertical pipe is clogged due to falling of the active material in the vertical pipe. In addition, when the active material is conveyed according to a pressure conveyance method in the related art, the pressure of the vertical pipe increases, and the thickness of the pipe becomes thick to handle a load acting on the vertical pipe, which may cause an increase in material costs.

### [Technical Problem]

The present invention is directed to providing a smart granular raw material conveyance system and a smart granular raw material conveyance method for smoothly passing a precisely-metered granular raw material in a vertical pipe that is vertically installed in the conveyance line and preventing the granular material from remaining or stagnating in the vertical pipe when a granular material in the form of powder is conveyed along a conveyance line.

### [Technical Solution]

In order to solve the aforementioned problems, according to preferred embodiments of the present invention, a smart granular raw material conveyance system according to the present invention includes a granular material conveyance unit including at least one of a first conveyance unit configured to convey a granular material in an amount corresponding to a first conveyance amount, a second conveyance unit spaced apart from the first conveyance unit and configured to convey the granular material in an amount corresponding to a second conveyance amount equal to or different from the first conveyance amount, and a third conveyance unit spaced apart from the first conveyance unit and the second conveyance unit and configured to convey the granular material in an amount corresponding to a third conveyance amount equal to or less than the first conveyance amount or the second conveyance amount.

In the smart granular raw material conveyance system according to the present invention, when the granular material of the first conveyance unit rises in a first vertical pipe formed long in a height direction, part of the granular material of the first conveyance amount passes through the first vertical pipe according to a suction conveyance method using a suction force acting on an upper end side of the first vertical pipe, and next, a remaining granular material of the first conveyance amount passes through the first vertical pipe according to a pressure conveyance method using a pressurizing force acting on a lower end side of the first vertical pipe.

Here, the first conveyance unit includes a granular material metering valve configured to meter the granular material in a predetermined fixed amount corresponding to the first conveyance amount, the granular material metering valve includes a hollow metering housing having an open inlet to which a hopper is coupled and an open outlet disposed to be opposed to the inlet and a distribution module built into the metering housing to be rotatable with respect to a first virtual shaft perpendicular to a virtual line connecting the inlet and the outlet and having a plurality of unit discharge grooves arranged at equal intervals along a rotation direction, and the granular material introduced into the inlet by rotation of the distribution module is separated and accommodated in a predetermined fixed amount for each unit discharge groove and then discharged through the outlet according to a first-in-first-out method.

Here, the first conveyance unit may include a first input module configured to store the granular material and meter and discharge the granular material in the first conveyance amount, a 1-1 pressure conveyance module configured to pressurize the granular material discharged from the first input module using process gas or compressed air so that the granular material discharged from the first input module is conveyed according to the pressure conveyance method using a pressurizing force, the first vertical pipe formed long in the height direction to form a path through which the granular material discharged from the first input module rises, a first metering module configured to suck and store the granular material discharged from the first input module or the granular material of the first vertical pipe using process gas or compressed air so that the granular material discharged from the first input module is conveyed according to the suction conveyance method using a suction force, and meter and discharge the granular material in a first metered amount using a rotary valve method, and a 1-2 pressure conveyance module configured to pressurize the granular material discharged from the first metering module using process gas or compressed air so that the granular material discharged from the first metering module is conveyed according to the pressure conveyance method using a pressurizing force, at least one of the first input module and the first metering module may include the granular material metering valve, based on the first vertical pipe, the 1-1 pressure conveyance module may be connected to the lower end side of the first vertical pipe and the first input module may be connected to the 1-1 pressure conveyance module, and based on the first vertical pipe, the first metering module may be connected to the upper end side of the first vertical pipe and the 1-2 pressure conveyance module may be connected to the first metering module.

Here, the first metering module may include a first metering hopper in which the granular material conveyed through the first vertical pipe is stored, a first vacuum ejector configured to suck the granular material discharged from the first input module according to the suction conveyance method using a suction force and transfer the granular material to the first metering hopper, and a first metering valve configured to meter and discharge the granular material stored in the first metering hopper in the first metered amount using the rotary valve method, and the first metering valve may include the granular material metering valve.

Here, the first vacuum ejector may include a vacuum tank unit having an inside maintained in a vacuum state by process gas or compressed air, a vacuum head unit configured to generate the suction force as the process gas or the compressed air is input to maintain the inside of the vacuum tank unit in the vacuum state, a granular material input unit to which the first vertical pipe is connected so that the first vertical pipe communicates with the vacuum tank unit, a connection valve unit configured to communicate between the vacuum tank unit and the first metering hopper in an openable and closable manner, and a control unit configured to control an operating relationship between the first input module, the 1-1 pressure conveyance module, and the vacuum head unit.

Here, the control unit may be configured to operate the vacuum head unit in a state where the 1-1 pressure conveyance module is stopped so that part of the granular material passes through the first vertical pipe according to the suction conveyance method by a suction force as the granular material is discharged from the first input module and next, stop the vacuum head unit and simultaneously operate the 1-1 pressure conveyance module so that the rest of the granular material passes through the first vertical pipe according to the pressure conveyance method by a pressurizing force.

Here, the first input module may include a first input hopper in which the granular material is stored, a first magnetic filter configured to filter magnetic foreign substances from the granular material when the granular material is put into the first input hopper, a first mesh filter configured to filter non-magnetic foreign substances from the granular material when the granular material is put into the first input hopper, and a first input valve configured to meter and discharge the granular material stored in the first input hopper in the first conveyance amount using the rotary valve method, and the first input valve may include the granular material metering valve.

In the smart granular raw material conveyance system according to the present invention, when the granular material of the second conveyance unit rises in a second vertical pipe formed long in the height direction, part of the granular material of the second conveyance amount may pass through the second vertical pipe according to the suction conveyance method using a suction force acting on an upper end side of the second vertical pipe, and next, a remaining granular material of the second conveyance amount may pass through the second vertical pipe according to the pressure conveyance method using a pressurizing force acting on a lower end side of the second vertical pipe.

Here, the second conveyance unit may include a granular material metering valve configured to meter the granular material in a predetermined fixed amount corresponding to the second conveyance amount, the granular material metering valve may include a hollow metering housing having an open inlet to which a hopper is coupled and an open outlet disposed to be opposed to the inlet and a distribution module built into the metering housing to be rotatable with respect to a first virtual shaft perpendicular to a virtual line connecting the inlet and the outlet and having a plurality of unit discharge grooves arranged at equal intervals along a rotation direction, and the granular material introduced into the inlet by rotation of the distribution module may be separated and accommodated in a predetermined fixed amount for each unit discharge groove and then discharged through the outlet according to a first-in-first-out method.

Here, the second conveyance unit may include a second input module configured to store the granular material and meter and discharge the granular material in the second conveyance amount, a 2-1 pressure conveyance module configured to pressurize the granular material discharged from the second input module using process gas or compressed air so that the granular material discharged from the second input module is conveyed according to the pressure conveyance method using a pressurizing force, a second vertical pipe formed long in the height direction to form a path through which the granular material discharged from the second input module rises, a second metering module configured to suck and store the granular material discharged from the second input module or the granular material of the second vertical pipe using process gas or compressed air so that the granular material discharged from the second input module is conveyed according to the suction conveyance method using a suction force, and meter and discharge the granular material in a second metered amount using a rotary valve method, and a 2-2 pressure conveyance module configured to pressurize the granular material discharged from the second metering module using process gas or compressed air so that the granular material discharged from the second metering module is conveyed according to the pressure conveyance method using a pressurizing force, at least one of the second input module and the second metering module may include the granular material metering valve, based on the second vertical pipe, the 2-1 pressure conveyance module may be connected to the lower end side of the second vertical pipe, and the second input module may be connected to the 2-1 pressure conveyance module, and based on the second vertical pipe, the second metering module may be connected to the upper end side of the second vertical pipe, and the 2-2 pressure conveyance module may be connected to the second metering module.

Here, the second metering module may include a second metering hopper in which the granular material conveyed through the second vertical pipe is stored, a second vacuum ejector configured to suck the granular material discharged from the second input module according to the suction conveyance method using a suction force and transfer the granular material to the second metering hopper, and a second metering valve configured to meter and discharge the granular material stored in the second metering hopper in the second metered amount using the rotary valve method, and the second metering valve may include the granular material metering valve.

Here, the second vacuum ejector may include a vacuum tank unit having an inside maintained in a vacuum state by process gas or compressed air, a vacuum head unit configured to generate the suction force as the process gas or the compressed air is input to maintain the inside of the vacuum tank unit in the vacuum state, a granular material input unit to which the second vertical pipe is connected so that the second vertical pipe communicates with the vacuum tank unit, a connection valve unit configured to communicate between the vacuum tank unit and the second metering hopper in an openable and closable manner, and a control unit configured to control an operating relationship between the second input module, the 2-1 pressure conveyance module, and the vacuum head unit.

Here, the control unit may be configured to operate the vacuum head unit in a state where the 2-1 pressure conveyance module is stopped so that part of the granular material passes through the second vertical pipe according to the suction conveyance method by a suction force as the granular material is discharged from the second input module and next, stop the vacuum head unit and simultaneously operate the 2-1 pressure conveyance module so that the rest of the granular material passes through the second vertical pipe according to the pressure conveyance method by a pressurizing force.

Here, the second conveyance unit may include a second input module configured to store the granular material and meter and discharge the granular material in the second conveyance amount, a 2-1 pressure conveyance module configured to pressurize the granular material discharged from the second input module using process gas or compressed air so that the granular material discharged from the second input module is conveyed according to the pressure conveyance method using a pressurizing force, a second vertical pipe formed long in the height direction to form a path through which the granular material discharged from the second input module rises, a silo module configured to suck and store the granular material discharged from the second input module or the granular material of the second vertical pipe using process gas or compressed air so that the granular material discharged from the second input module is conveyed according to the suction conveyance method using a suction force, and meter and discharge the granular material in a second metered amount using a feeding method, and a silo pressure conveyance module configured to pressurize the granular material discharged from the silo module using process gas or compressed air so that the granular material discharged from the silo module is conveyed according to the pressure conveyance method using a pressurizing force, the second input module may include the granular material metering valve, based on the second vertical pipe, the 2-1 pressure conveyance module may be connected to the lower end side of the second vertical pipe, and the second input module may be connected to the 2-1 pressure conveyance module, and based on the second vertical pipe, the silo module may be connected to the upper end side of the second vertical pipe, and the silo pressure conveyance module may be connected to the silo module.

Here, the silo module may include a granular material silo in which the granular material conveyed through the second vertical pipe is stored, a silo vacuum ejector configured to suck the granular material discharged from the second input module according to the suction conveyance method using a suction force and transfer the granular material to the granular material silo, and a table feeder configured to meter and discharge the granular material stored in the main silo in a second metered amount using the feeding method.

Here, the silo vacuum ejector may include a vacuum tank unit having an inside maintained in a vacuum state by process gas or compressed air, a vacuum head unit configured to generate the suction force as the process gas or the compressed air is input to maintain the inside of the vacuum tank unit in the vacuum state, a granular material input unit to which the second vertical pipe is connected so that the second vertical pipe communicates with the vacuum tank unit, a connection valve unit configured to communicate between the vacuum tank unit and the granular material silo in an openable and closable manner, and a control unit configured to control an operating relationship between the second input module, the 2-1 pressure conveyance module, and the vacuum head unit.

Here, the control unit may be configured to operate the vacuum head unit in a state where the 2-1 pressure conveyance module is stopped so that part of the granular material passes through the second vertical pipe according to the suction conveyance method by a suction force as the granular material is discharged from the second input module and next, stop the vacuum head unit and simultaneously operate the 2-1 pressure conveyance module so that the rest of the granular material passes through the second vertical pipe according to the pressure conveyance method by a pressurizing force.

Here, the second conveyance unit may include a silo module configured to store the granular material and meter and discharge the granular material in the second conveyance amount using a feeding method, a silo pressure conveyance module configured to pressurize the granular material discharged from the silo module using process gas or compressed air so that the granular material discharged from the second metering module is conveyed according to the pressure conveyance method using a pressurizing force, a second vertical pipe formed long in the height direction to form a path through which the granular material discharged from the silo module rises, a second metering module configured to suck and store the granular material discharged from the silo module or the granular material of the second vertical pipe using process gas or compressed air so that the granular material discharged from the silo module is conveyed according to the suction conveyance method using a suction force, and meter and discharge the granular material in a second metered amount using a rotary valve method, and a 2-2 pressure conveyance module configured to pressurize the granular material discharged from the second metering module using process gas or compressed air so that the granular material discharged from the second metering module is conveyed according to the pressure conveyance method using a pressurizing force, the second metering module may include the granular material metering valve, based on the second vertical pipe, the silo pressure conveyance module may be connected to the lower end side of the second vertical pipe, and the silo module may be connected to the silo pressure conveyance module, and based on the second vertical pipe, the second metering module may be connected to the upper end side of the second vertical pipe, and the 2-2 pressure conveyance module may be connected to the second metering module.

Here, the second metering module may include a second metering hopper in which the granular material conveyed through the second vertical pipe is stored, a second vacuum ejector configured to suck the granular material discharged from the second input module according to the suction conveyance method using a suction force and transfer the granular material to the second metering hopper, and a second metering valve configured to meter and discharge the granular material stored in the second metering hopper in the second metered amount using the rotary valve method, and the second metering valve may include the granular material metering valve.

Here, the second vacuum ejector may include a vacuum tank unit having an inside maintained in a vacuum state by process gas or compressed air, a vacuum head unit configured to generate the suction force as the process gas or the compressed air is input to maintain the inside of the vacuum tank unit in the vacuum state, a granular material input unit to which the second vertical pipe is connected so that the second vertical pipe communicates with the vacuum tank unit, a connection valve unit configured to communicate between the vacuum tank unit and the second metering hopper in an openable and closable manner, and a control unit configured to control an operating relationship between the silo module, the silo pressure conveyance module, and the vacuum head unit.

Here, the control unit may be configured to operate the vacuum head unit in a state where the silo pressure conveyance module is stopped so that part of the granular material passes through the second vertical pipe according to the suction conveyance method by a suction force as the granular material is discharged from the silo module and next, stop the vacuum head unit and simultaneously operate the silo pressure conveyance module so that the rest of the granular material passes through the second vertical pipe according to the pressure conveyance method by a pressurizing force.

Here, the second input module may include a second input hopper in which the granular material is stored, a second magnetic filter configured to filter magnetic foreign substances from the granular material when the granular material is put into the second input hopper, a second mesh filter configured to filter non-magnetic foreign substances from the granular material when the granular material is put into the second input hopper, and a second input valve configured to meter and discharge the granular material stored in the second input hopper in the second conveyance amount using the rotary valve method, and the second input valve may include the granular material metering valve.

Here, the third conveyance unit may include a third input module configured to store the granular material and meter and discharge the granular material in the third conveyance amount and a third pressure conveyance module configured to pressurize the granular material discharged from the third input module using process gas or compressed air so that the granular material discharged from the third input module is conveyed according to a pressure conveyance method using a pressurizing force.

The smart granular raw material conveyance system according to the present invention may further include a binder conveyance unit configured to convert a binder to be mixed with the active material into a liquid solution in an amount corresponding to a binder conveyance amount and convey the converted binder and a solvent conveyance unit configured to convey a solvent for forming the solution by dissolving the binder in an amount corresponding to a solvent conveyance amount, and the granular material may be made of an active material that is a raw material of an electrode.

Here, the binder conveyance unit may include a binder input module configured to store the binder and meter and discharge the binder according to the binder conveyance amount, a binder pressure conveyance module configured to pressurize the binder discharged from the binder input module using process gas or compressed air so that the binder discharged from the binder input module is conveyed according to the pressure conveyance method using a pressurizing force, a binder mixing module configured to mix the binder transferred through the binder pressure conveyance module and a solvent transferred through the solvent conveyance unit to form the solution, a solution conveyance module configured to pump the solution, a solution hopper scale configured to store the solution transferred from the solution conveyance module and discharge the solution in a fixed amount corresponding to a conveyance amount of the solution, and a solution supply pump configured to pump the solution of the solution hopper scale in an amount corresponding to the conveyance amount of the solution.

Here, the solvent conveyance unit may include a solvent tank in which the solvent is stored, a solvent pumping module configured to pump the solvent stored in the solvent tank, a mixing adjustment module configured to adjust the solvent to be mixed with the binder, and a slurry adjusting module configured to adjust the solvent to be mixed in the slurry.

The smart granular raw material conveyance system according to the present invention may further include at least one of a conductive material conveyance unit configured to convey a conductive material to be mixed with a slurry for forming the electrode in an amount corresponding to a conductive material conveyance amount and a dispersant conveyance unit configured to convey a dispersant to be mixed with the slurry for forming the electrode in an amount corresponding to a dispersant conveyance amount.

Here, the conductive material conveyance unit may include a conductive material hopper scale in which the conductive material is stored and a conductive material supply pump configured to pump the conductive material stored in the conductive material hopper scale in a fixed amount corresponding to the conductive material conveyance amount.

Here, the dispersant conveyance unit may include a dispersant hopper scale in which the dispersant is stored and a dispersant supply pump configured to pump the dispersant stored in the dispersant hopper scale in a fixed amount corresponding to the dispersant conveyance amount.

The smart granular raw material conveyance system according to the present invention may further include a mixing unit configured to mix the granular material transferred through the granular material conveyance unit, the solution transferred through the binder conveyance unit, and the solvent transferred through the solvent conveyance unit.

A smart granular raw material conveyance method is a method of conveying the granular material using the smart granular raw material conveyance system according to the present invention, the method including a granular material conveyance step including at least one of a first conveyance step of conveying a granular material in an amount corresponding to a first conveyance amount, a second conveyance step of conveying the granular material in an amount corresponding to a second conveyance amount equal to or different from the first conveyance amount, and a third conveyance step of conveying the granular material in an amount corresponding to a third conveyance amount less than the first conveyance amount or the second conveyance amount.

Here, the first conveyance step includes a first suction conveyance step of, when the granular material of the first conveyance unit rises in a first vertical pipe formed long in a height direction, passing part of the granular material of the first conveyance amount in the first vertical pipe according to a suction conveyance method using a suction force acting on an upper end side of the first vertical pipe and a first pressure conveyance step of, after going through the first suction conveyance step, passing a remaining granular material of the first conveyance amount in the first vertical pipe according to a pressure conveyance method using a pressurizing force acting on a lower end side of the first vertical pipe.

Here, the second conveyance step includes a second suction conveyance step of, when the granular material of the second conveyance unit rises in a second vertical pipe formed long in the height direction, passing part of the granular material of the second conveyance amount in the second vertical pipe according to a suction conveyance method using a suction force acting on an upper end side of the second vertical pipe and a second pressure conveyance step of, after going through the second suction conveyance step, passing a remaining granular material of the second conveyance amount through the second vertical pipe according to a pressure conveyance method using a pressurizing force acting on a lower end side of the second vertical pipe.

Here, the third conveyance step may include a third input step of metering and discharging the granular material stored in the third input module in the third conveyance amount and a third pressure conveyance step of pressurizing the granular material discharged from the third input module using process gas or compressed air so that the granular material discharged through the third input step is conveyed according to a pressure conveyance method using a pressurizing force.

The method of conveying the granular material according to the present invention may further include a binder conveyance step of converting a binder to be mixed with the active material into a liquid solution in an amount corresponding to a binder conveyance amount and conveying the converted binder and a solvent conveyance step of conveying a solvent for forming the solution by dissolving the binder in an amount corresponding to a solvent conveyance amount, and the granular material may be made of an active material that is a raw material of an electrode.

The method of conveying the granular material according to the present invention may further include at least one of a conductive material conveyance step of conveying a conductive material to be mixed with a slurry for forming the electrode in an amount corresponding to a conductive material conveyance amount and a dispersant conveyance step of conveying a dispersant to be mixed with the slurry for forming the electrode in an amount corresponding to a dispersant conveyance amount.

The smart granular raw material conveyance method according to the present invention may further include a mixing step of mixing the granular material transferred through the granular material conveyance step, the solution transferred through the binder conveyance step, and the solvent transferred through the solvent conveyance step to form the slurry for forming the electrode.

### [Advantageous Effects]

With a smart granular raw material conveyance system and a smart granular raw material conveyance method according to the present invention, when a granular material in the form of powder is conveyed along granular material conveyance lines, a precisely-metered granular material can be smoothly passed in a corresponding vertical pipe that is vertically installed in the granular material conveyance lines and the granular material can be prevented from remaining or stagnating in the vertical pipe.

In addition, in the present invention, since pressure conveying of the granular material is performed after suction conveying of the granular material in a first granular material line of the granular material conveyance lines, a load acting on a first vertical pipe can be minimized, the thickness of the first vertical pipe can be reduced, and a cost reduction effect can be expected through maintenance cost and material cost reduction.

In addition, in the present invention, through a detailed configuration of a first conveyance unit, the granular material can be smoothly conveyed between a first input module and a first metering module, and suction conveying of the granular material and pressure conveying of the granular material can be clearly performed in the first granular material line of the granular material conveyance lines.

In addition, in the present invention, through a detailed configuration of the first metering module, a suction force for suction conveying of the granular material can be stably generated in the first granular material line of the granular material conveyance lines, and the granular material can be smoothly conveyed between the first vertical pipe and a first metering hopper in the integrated first metering module.

In addition, in the present invention, through a detailed configuration of a first vacuum ejector, a stable suction force can be provided to the granular material, continuous conveyance of the granular material can be clarified by being performed in an amount corresponding to a first conveyance amount, and clogging of the first granular material line or the first vertical pipe can be resolved by preventing the granular material from remaining or stagnating in the first vertical pipe.

In addition, in the present invention, through a detailed configuration of the first input module, transfer of the granular material transferred from the outside can be facilitated, and the purity of the granular material can be improved by removing foreign substances mixed with the granular material.

In addition, in the present invention, since pressure conveying of the granular material is performed after suction conveying of the granular material in a second granular material line of the granular material conveyance lines, a load acting on a second vertical pipe can be minimized, the thickness of the second vertical pipe can be reduced, and a cost reduction effect can be expected through maintenance cost and material cost reduction.

In addition, in the present invention, through a detailed configuration of a second conveyance unit, the granular material can be smoothly conveyed between a second input module and a second metering module, and suction conveying of the granular material and pressure conveying of the granular material can be clearly performed in the second granular material line of the granular material conveyance lines.

In addition, in the present invention, through a detailed configuration of the second metering module, a suction force for suction conveying of the granular material can be stably generated in the second granular material line of the granular material conveyance lines, and the granular material can be smoothly conveyed between the second vertical pipe and a second metering hopper in the integrated second metering module.

In addition, in the present invention, through a detailed configuration of a second vacuum ejector, a stable suction force can be provided to the granular material, continuous conveyance of the granular material can be clarified by being performed in an amount corresponding to a second conveyance amount, and clogging of the second granular material line or the second vertical pipe can be resolved by preventing the granular material from remaining or stagnating in the second vertical pipe.

In addition, in the present invention, through a detailed configuration of the second conveyance unit, the granular material can be smoothly conveyed between the second input module and a silo module, and suction conveying of the granular material and pressure conveying of the granular material can be clearly performed in the second granular material line of the granular material conveyance lines.

In addition, in the present invention, through a detailed configuration of the silo module, a suction force for suction conveying of the granular material can be stably generated in the second granular material line of the granular material conveyance lines, and the granular material can be smoothly conveyed between the second vertical pipe and a granular material silo in the integrated silo module.

In addition, in the present invention, through a detailed configuration of a silo vacuum ejector, a stable suction force can be provided to the granular material, continuous conveyance of the granular material can be clarified by being performed in the amount corresponding to the second conveyance amount, and clogging of the second granular material line or the second vertical pipe can be resolved by preventing the granular material from remaining or stagnating in the second vertical pipe.

In addition, in the present invention, through a detailed configuration of the second conveyance unit, the granular material can be smoothly conveyed between the silo module and the second metering module, and suction conveying of the granular material and pressure conveying of the granular material can be clearly performed in the second granular material line of the granular material conveyance lines.

In addition, in the present invention, a large amount of granular material transferred from the outside through the silo module can be stored and then intermittently discharged.

In addition, in the present invention, through a detailed configuration of the second input module, transfer of the granular material transferred from the outside can be facilitated, and the purity of the granular material can be improved by removing foreign substances mixed with the granular material.

In addition, in the present invention, through a detailed configuration of a third conveyance unit, the amount of granular material can be adjusted and additionally input depending on a state of a final slurry in a mixing unit, which is the final destination of the granular material.

In addition, in the present invention, through an additional configuration of a binder conveyance unit and a solvent conveyance unit, a slurry for forming an electrode can be stably prepared using the granular material made of an active material.

In addition, in the present invention, through a detailed configuration of the binder conveyance unit, a binder in the form of powder or fillet can be stably dissolved, and the concentration of a solution formed by dissolution of the binder can be easily adjusted.

In addition, in the present invention, through a detailed configuration of the solvent conveyance unit, a fixed amount of solvent can be stably supplied to a required unit.

In addition, in the present invention, through an additional configuration of a conductive material conveyance unit, a fixed amount of conductive material can be stably supplied to the final slurry, and the electrical conductivity of the slurry can be improved.

In addition, in the present invention, through a detailed configuration of the conductive material conveyance unit, liquefaction of the conductive material is promoted, and thus the conductive material is smoothly conveyed and a safe homogeneous mixture of the conductive material and the active material is formed.

In addition, in the present invention, through an additional configuration of a dispersant conveyance unit, the granular material as an active material can be smoothly dispersed, and the marketability of the final slurry can be improved.

In addition, in the present invention, through a detailed configuration of the dispersant conveyance unit, liquefaction of the conductive material is promoted, and thus the dispersant is smoothly conveyed, the active material is smoothly predispersed through the dispersant, and the dispersant and the active material form a stable, homogeneous mixture.

In addition, in the present invention, through an additional configuration of the mixing unit, the final slurry for forming the electrode can be stabilized.

In addition, in the present invention, through a detailed configuration of the mixing unit, the slurry can be formed as a stable homogeneous mixture, and the concentration of the slurry can be easily adjusted.

In addition, in the present invention, through detailed configurations of the smart granular raw material conveyance method, a coupling relationship of the smart granular raw material conveyance system can be clarified, the smart granular raw material conveyance system can be stably implemented, and effects of the above-mentioned units can be clearly expressed.

With the granular material metering valve according to the present invention, the granular material in the form of powder can be mechanically clearly metered in a fixed amount and discharged sequentially.

In addition, in the present invention, through a metering housing, a distribution module is rotatably supported, and unit discharge grooves are formed inside so that a preset fixed amount of granular material is separated and accommodated.

In addition, in the present invention, through a detailed configuration of the metering housing, among a distribution opening and a checking hole, at least the checking hole can be opened and closed, attachment and detachment of the distribution module from the metering housing can be simplified, and maintenance of the distribution module in the metering housing can be stabilized.

In addition, in the present invention, through a configuration of a purge unit, dust explosion is prevented at at least one of an inlet and an outlet, the granular material is more smoothly conveyed, the granular material is supplied to the distribution module in a fixed amount, and the granular material is discharged from the distribution module in fixed amount.

In addition, in the present invention, through the distribution module, the unit discharge grooves capable of accommodating a preset fixed amount of granular material can be formed inside the metering housing, and thus the granular material can be smoothly conveyed.

In addition, in the present invention, through a detailed configuration of the distribution module, partitioning into the unit discharge grooves can be stably achieved, and thus the granular material in the unit discharge grooves can be clearly conveyed.

In addition, in the present invention, through a scraper, the granular material can be prevented from sticking inside the metering housing, and the granular material can be prevented from being transferred between the unit discharge grooves.

In addition, in the present invention, through a shaft joint module, among the distribution opening and the checking hole, at least the distribution opening can be opened and closed, attachment and detachment of the distribution module from the metering housing can be simplified, and maintenance of the distribution module in the metering housing can be stabilized.

In addition, in the present invention, through an opening and closing joint member, the granular material inside the metering housing can be prevented from leaking to the outside, rotation of the distribution module can be clearly made, and flow due to rotation of the distribution module can be prevented.

In addition, in the present invention, through a shaft joint member, a transmission drive shaft, which is a first virtual shaft, can be stably supported, and rotation of the transmission drive shaft can be smoothly made.

In addition, in the present invention, by adjusting a rotational force through a conversion module, the distribution module can be stably rotated with uniform rotational force.

In addition, in the present invention, through a detailed configuration of the conversion module, a transmission direction of the rotational force can be easily changed.

In addition, in the present invention, through a coupling relationship of the transmission drive shaft, the distribution module, the shaft joint module, and the conversion module can be disposed on the same axis so that the rotation of the transmission drive shaft is smoothly made, a coupling force of the transmission drive shaft in the distribution module can be improved so that the distribution module is stably fixed to the transmission drive shaft, and the transmission drive shaft smoothly rotates in the shaft joint module.

In addition, in the present invention, through a power generation module, a stable rotational force can be generated, and transmission of the rotational force to the conversion module can be clearly made.

In addition, in the present invention, through a rotation sensing module, a rotation amount of the distribution module can be easily checked with respect to the unit discharge groove, and a position of the unit discharge groove can be easily and clearly identified based on the inlet and the outlet.

In addition, in the present invention, through a detailed configuration of the rotation sensing module, position detection necessary for adjusting a rotation speed of the distribution module is clearly made and a communication relationship between the inlet, the unit discharge groove, and the outlet is adjusted so that the granular material is stably conveyed.

In addition, in the present invention, through a detailed configuration of a sensing paddle, a sensing position can be stably specified to correspond to a rotational width of the unit discharge groove, and the sensitivity of a speed sensor may be improved so that the rotational force is clearly adjusted.

In addition, in the present invention, through a default setting unit, the unit discharge groove may be initially disposed at a right position corresponding to the inlet, and the granular material metering valve may be easily initialized.

In addition, in the present invention, through a speed control module, the conveyance amount of the granular material transferred to the distribution module is clearly adjusted and a preset fixed amount of granular material is injected into each unit distribution groove.

In addition, in the present invention, since a deceleration force smaller than a reference rotational force is provided through the fine deceleration method, energy waste in the power generation module can be prevented, and rotational force control can be smoothly performed.

In addition, in the present invention, since an acceleration force greater than the reference rotational force is provided through an acceptable acceleration method, control according to the rotation of the distribution module can be easily performed, and rotational force control can be smoothly performed.

### [Description of Drawings]

FIG. 1 is a block diagram for conveyance of an active material that is a granular material in a smart granular raw material conveyance system according to one embodiment of the present invention.
FIG. 2 is a diagram illustrating a conveyance control unit in the smart granular raw material conveyance system according to one embodiment of the present invention.
FIG. 3 is a block diagram for conveyance of a binder to be mixed with an active material in the smart granular raw material conveyance system according to one embodiment of the present invention.
FIG. 4 is a block diagram for conveyance of a solvent to be mixed with an active material in the smart granular raw material conveyance system according to one embodiment of the present invention.
FIG. 5 is a block diagram for conveyance of a conductive material to be mixed with an active material in the smart granular raw material conveyance system according to one embodiment of the present invention.
FIG. 6 is a block diagram for conveyance of a dispersant to be mixed with an active material in the smart granular raw material conveyance system according to one embodiment of the present invention.
FIG. 7 is a block diagram illustrating a mixing unit for mixing materials in the smart granular raw material conveyance system according to one embodiment of the present invention.
FIG. 8 is a block diagram illustrating a smart granular raw material conveyance method according to one embodiment of the present invention.
FIG. 9 is a plan view illustrating a granular material metering valve according to one embodiment of the present invention.
FIG. 10 is a front sectional view illustrating the granular material metering valve according to one embodiment of the present invention.
FIG. 11 is a side view illustrating the granular material metering valve according to one embodiment of the present invention.
FIG. 12 is a view illustrating a distribution module in the granular material metering valve according to one embodiment of the present invention.
FIG. 13 is an exploded view illustrating a coupled state of the distribution module in the granular material metering valve according to one embodiment of the present invention.
FIGS. 14A and 14B are a front view and a side view illustrating a first coupled state of a rotation sensing module in the granular material metering valve according to one embodiment of the present invention, respectively.
FIG. 15 is a side view illustrating a second coupled state of the rotation sensing module in the granular material metering valve according to one embodiment of the present invention.
FIG. 16 is a perspective view illustrating a sensing paddle of the rotation sensing module in FIG. 15.
FIGS. 17A and 17B are a front view and a side view illustrating a third coupled state of the rotation sensing module in the granular material metering valve according to one embodiment of the present invention, respectively.

### [Modes of the Invention]

Hereinafter, one embodiment of a smart granular raw material conveyance system and a smart granular raw material conveyance system according to the present invention will be described with reference to the accompanying drawings. In this case, the present invention is not limited or restricted by the embodiment. In addition, in describing the present invention, detailed descriptions of well-known functions or configurations may be omitted to clarify the gist of the present invention.

When a granular material in the form of powder is conveyed along granular material conveyance lines, a smart granular raw material conveyance system according to one embodiment of the present invention may smoothly pass a precisely-metered granular material in a corresponding vertical pipe that is vertically installed in the conveyance line and prevent the granular material from remaining or stagnating in the vertical pipe.

In the following description, the granular material conveyance line represents a granular material conveyance path in a granular material conveyance unit 400, a first granular material line represents a granular material conveyance path in a first conveyance unit 100, a second granular material line represents a granular material conveyance path in a second conveyance unit 200, and a third granular material line represents a granular material conveyance path in a third conveyance unit 300. In addition, a binder conveyance line represents a binder conveyance path in a binder conveyance unit 500, a solvent conveyance line represents a solvent conveyance path in a solvent conveyance unit 600, a conductive material conveyance line represents a conductive material conveyance path in a conductive material conveyance unit 700, and a dispersant conveyance line represents a dispersant conveyance path in a dispersant conveyance unit 800.

In the smart granular raw material conveyance system according to one embodiment of the present invention, the granular material may be an active material. The smart granular raw material conveyance system according to one embodiment of the present invention will be described as a system for preparing a slurry for forming an electrode of an electrochemical device.

The active material is a raw material for an electrode of an electrochemical device.

A binder provides a binding force to a final slurry for forming an electrode of an electrochemical device.

In a solvent, at least the binder is dissolved among the binder, a conductive material, and a dispersant to improve the bonding force of the active material or the final slurry.

The conductive material improves the conductivity of the final slurry by forming an electron conduction path in the final slurry for improving the electrical conductivity of the electrode of the electrochemical device.

The dispersant disperses at least one of the active material and the conductive material so that the final slurry is uniformly mixed.

An electrolyte helps smooth movement of ions in the final slurry.

A concentration of the slurry may be adjusted by adjusting the solvent or electrolyte in the final slurry.

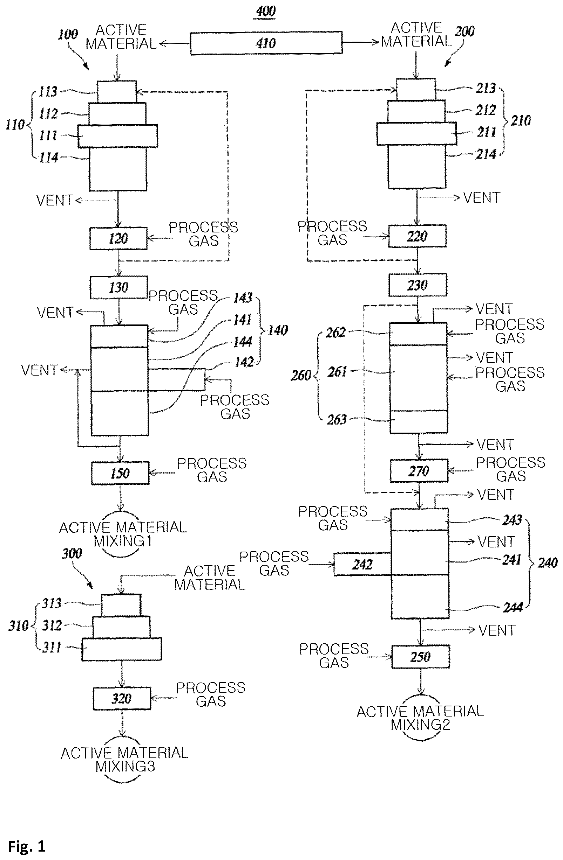

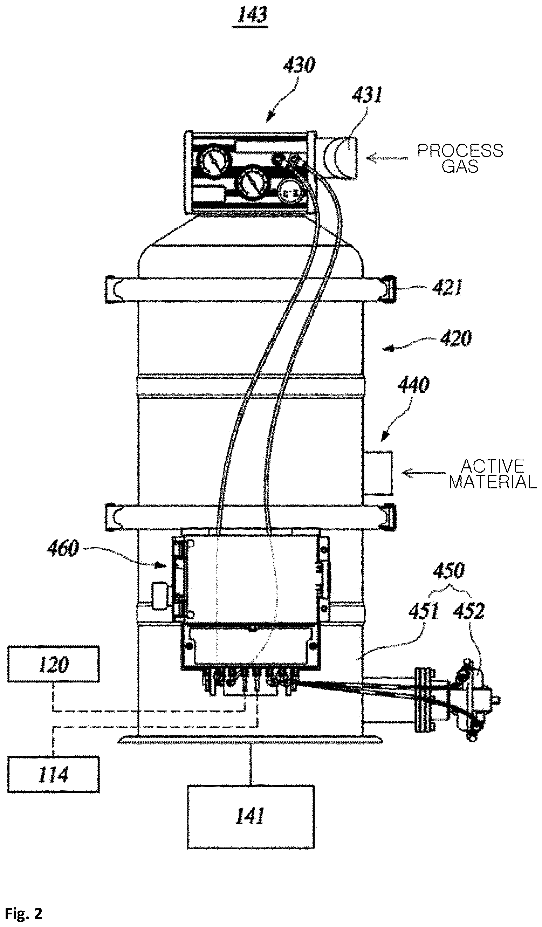

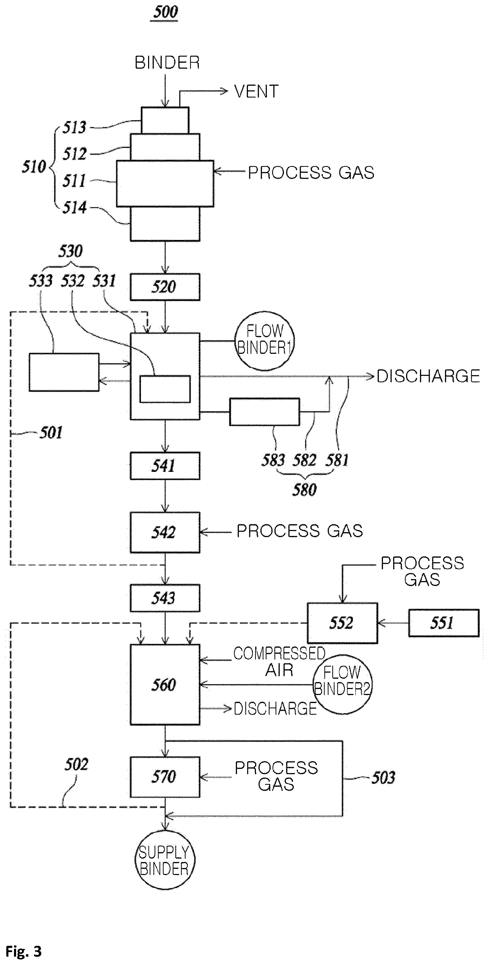

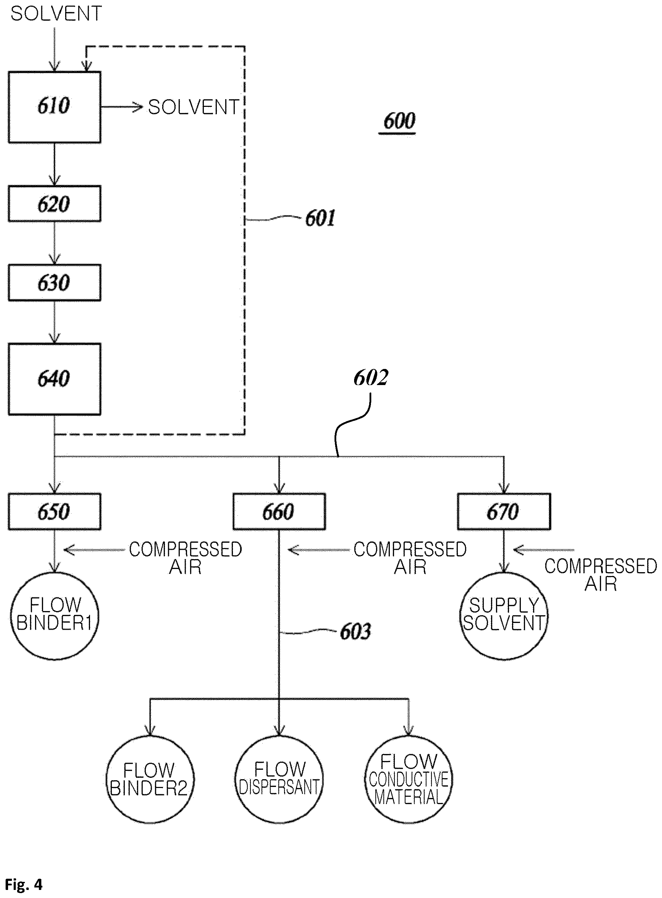

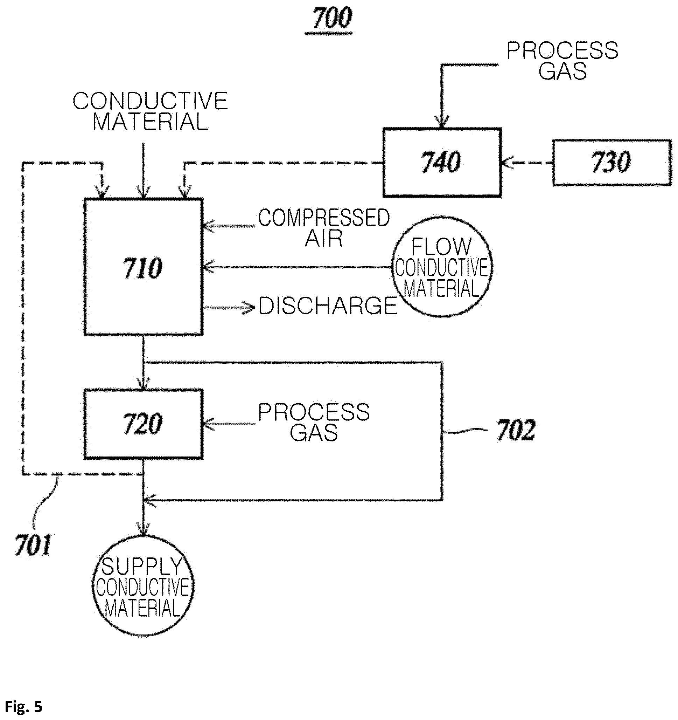

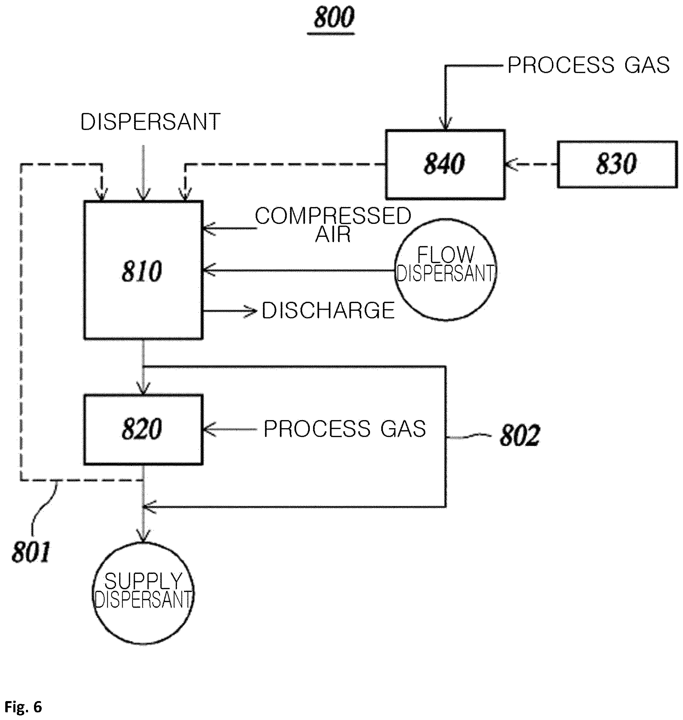

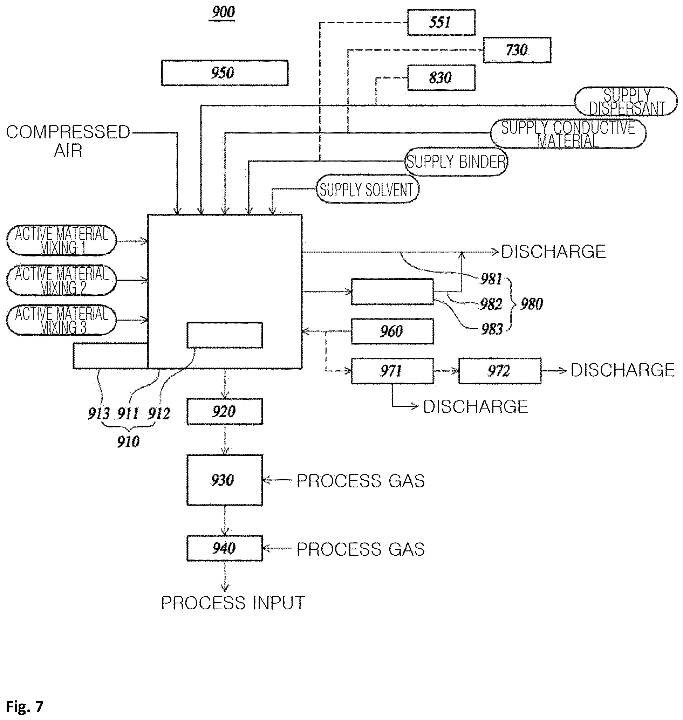

Referring to FIGS. 1 to 7, the smart granular raw material conveyance system according to one embodiment of the present invention may include the granular material conveyance unit 400 for conveying a granular material. In the granular material conveyance unit 400, the granular material is conveyed along the granular material conveyance lines.

The granular material conveyance unit 400 may include at least one of the first conveyance unit 100 that conveys the granular material in an amount corresponding to a first conveyance amount, a second conveyance unit 200 that is spaced apart from the first conveyance unit 100 and conveys the granular material in an amount corresponding to a second conveyance amount equal to or different from the first conveyance amount, and a third conveyance unit 300 that is spaced apart from the first conveyance unit 100 and the second conveyance unit 200 and conveys the granular material in an amount corresponding to a third conveyance amount less than the first conveyance amount or the second conveyance amount.

First, the first conveyance unit 100 may convey the granular material of the first vertical pipe 130 in two stages. The first conveyance unit 100 may include a granular material metering valve to be described below.

More specifically, when the granular material of the first conveyance unit 100 rises in a first vertical pipe 130 formed long in a height direction, part of the granular material of the first conveyance amount may pass through the first vertical pipe 130 according to a suction conveyance method using a suction force acting on an upper end side of the first vertical pipe 130. Next, a remaining granular material of the first conveyance amount may pass through the first vertical pipe 130 according to a pressure conveyance method using a pressurizing force acting on a lower end side of the first vertical pipe 130.

In this way, since the granular material conveyed from the first conveyance unit 100 passes through the first vertical pipe 130 by sequentially applying the suction conveyance method and the pressure conveyance method based on the first vertical pipe 130, it is possible to implement complete passage of the granular material in the first vertical pipe 130, prevent the granular material from stagnating in the first vertical pipe 130, and prevent the first vertical pipe 130 from being clogged by the granular material.

The first conveyance unit 100 may include a first input module 110 for storing the granular material and metering and discharging the granular material in the first conveyance amount, a 1-1 pressure conveyance module 120 for pressurizing the granular material discharged from the first input module 110 using process gas or compressed air so that the granular material discharged from the first input module 110 is conveyed according to the pressure conveyance method using a pressurizing force, the first vertical pipe 130 formed long in the height direction to form a path through which the granular material discharged from the first input module 110 rises, a first metering module 140 for sucking and storing the granular material discharged from the first input module 110 or the granular material of the first vertical pipe 130 using process gas or compressed air so that the granular material discharged from the first input module 110 is conveyed according to the suction conveyance method using a suction force, and metering and discharging the granular material in a first metered amount using a rotary valve method, and a 1-2 pressure conveyance module 150 for pressurizing the granular material discharged from the first metering module 140 using process gas or compressed air so that the granular material discharged from the first metering module 140 is conveyed according to a pressure conveyance method using a pressurizing force. At least one of the first input module 110 and the first metering module 140 may include the granular material metering valve to be described below.

In this case, based on the first vertical pipe 130, the 1-1 pressure conveyance module 120 is connected to the lower end side of the first vertical pipe 130, and the first input module 110 is connected to the 1-1 pressure conveyance module 120. In addition, based on the first vertical pipe 130, the first metering module 140 is connected to the upper end side of the first vertical pipe 130, and the 1-2 pressure conveyance module 150 is connected to the first metering module 140.

The first input module 110 may include a first input hopper 111 in which the granular material is stored, a first magnetic filter 112 for filtering magnetic foreign substances from the granular material when the granular material is put into the first input hopper 111, a first mesh filter 113 for filtering non-magnetic foreign substances from the granular material when the granular material is put into the first input hopper 111, and a first input valve 114 for metering and discharging the granular material stored in the first input hopper 111 in the first conveyance amount using the rotary valve method.

The first input hopper 111 may accommodate all the granular material stored in a granular material bag transferred from the outside through a granular material conveyance module 410. The granular material conveyance module 410 may be a crane or a chain block. The capacity of the first input hopper 111 may be variously changed depending on a granular material conveying speed or a granular material unit conveyance amount.

The first magnetic filter 112 and the first mesh filter 113 may be disposed at an upper end of the first input hopper 111 while being spaced apart from each other so that foreign substances from the granular material supplied from the granular material bag are filtered.

In one embodiment of the present invention, since the first mesh filter 113 is disposed above the first magnetic filter 112, the first mesh filter 113 may exhibit an effect of crushing the agglomerated granular material, restore the size of the agglomerated granular material to its original state, and improve an effect of filtering magnetic foreign substances in the granular material transferred from the granular material bag.

Since the first input valve 114 is provided with a plurality of pockets arranged at equal intervals along a circumferential direction around the intermittently rotated rotating shaft, a fixed amount of granular material may be accommodated in a corresponding pocket. In the first input valve 114, in one pocket, a fixed amount of granular material corresponding to the first conveyance amount may be accommodated. The capacity of one pocket in the first input valve 114 may be variously changed depending on the granular material conveying speed or the granular material unit conveyance amount to correspond to the first conveyance amount. The first input valve 114 may include the granular material metering valve to be described below.

Since the 1-1 pressure conveyance module 120 supplies process gas or compressed air generated in the system to the granular material intermittently discharged from the first input hopper 111 of the first input module 110, the granular material may be stably pressurized in the first granular material line.

Between the first input valve 114 of the first input module 110 and the 1-1 pressure conveyance module 120, in order to adjust an internal pressure of the first granular material line, a vent through which gas between the first input valve 114 and the 1-1 pressure conveyance module 120 is discharged or external gas is injected may be provided.

The first vertical pipe 130 forms a part of the first granular material line of the granular material conveyance lines. The first vertical pipe 130 forms the path through which the granular material rises in the height direction of the system in the first granular material line. The first vertical pipe 130 may be formed long in the height direction of the system.

The first metering module 140 may include a first metering hopper 141 in which the granular material conveyed through the first vertical pipe 130 is stored, a first vacuum ejector 143 for sucking the granular material discharged from the first input module 110 according to the suction conveyance method using a suction force and transferring the granular material to the first metering hopper 141, and a first metering valve 144 for metering and discharging the granular material stored in the first metering hopper 141 in the first metered amount using the rotary valve method. The first metering valve 144 may include the granular material metering valve to be described below.

The first metering hopper 141 may sequentially accommodate the granular material transferred through the 1-1 pressure conveyance module 120. The capacity of the first metering hopper 141 may be variously changed depending on the granular material conveying speed or the granular material unit conveyance amount.

The first metering hopper 141 may be provided with a first air unit 142 for dispersing the granular material accommodated in the first metering hopper 141 using process gas. The first air unit 142 may prevent agglomeration of the granular material accommodated in the first metering hopper 141 by injecting process gas into the first metering hopper 141. The first metering hopper 141 may be provided with a vent through which gas in the first metering hopper 141 is discharged or external gas is injected to adjust an internal pressure of the first metering hopper 141.

The first vacuum ejector 143 may include a vacuum tank unit 420 having an inside maintained in a vacuum state by process gas or compressed air, a vacuum head unit 430 for generating the suction force as the process gas or the compressed air is input to maintain the inside of the vacuum tank unit 420 in the vacuum state, a granular material input unit 440 to which the first vertical pipe 130 is connected so that the first vertical pipe 130 communicates with the vacuum tank unit 420, a connection valve unit 450 for communicating between the vacuum tank unit 420 and the first metering hopper 141 in an openable and closable manner, and a control unit 460 for controlling an operating relationship between the first input module 110, the 1-1 pressure conveyance module 120, and the vacuum head unit 430.

It is preferable that the vacuum tank unit 420 has a cylindrical shape to support the suction force. Since a vacuum jacket unit 421 surrounds and supports the vacuum tank unit 420, deformation of the vacuum tank unit 420 may be prevented and the vacuum tank unit 420 may be protected.

It is advantageous that the vacuum head unit 430 is provided at an upper end of the vacuum tank unit 420. The vacuum head unit 430 may be provided with a gas injection unit 431 into which process gas or compressed air is injected and a gas discharge unit that is spaced apart from the gas injection unit 431 and discharges process gas generated with the generation of the suction force.

The vacuum head unit 430 is provided with a venturi unit (not shown) for providing a suction force to the granular material using the venturi effect using the injected process gas or compressed air to stabilize the suction conveying of the granular material and easily adjust a suction conveying cycle.

The granular material input unit 440 may be provided on a side of the vacuum tank unit 420 or on the upper end of the vacuum tank unit 420 so that the granular material is smoothly conveyed from the first vertical pipe 130.

It is advantageous that the connection valve unit 450 is provided at a lower end of the vacuum tank unit 420. The connection valve unit 450 may include a vacuum buffer unit provided at the lower end of the vacuum tank unit 420 so that a vacuum state of the vacuum tank unit 420 is maintained, a valve body 451 provided at a lower end of the vacuum buffer unit and communicating with the first metering hopper 141 of the first metering module 140, a valve opening and closing unit provided on the valve body 451 to open and close the valve body 451 or to adjust an opening degree of the valve body 451, and an opening and closing driving unit 452 for operating the valve opening and closing unit.

Since the control unit 460 operates the vacuum head unit 430 in a state where the 1-1 pressure conveyance module 120 is stopped so that part of the granular material passes through the first vertical pipe 130 according to the suction conveyance method by a suction force as the granular material is discharged from the first input module 110 and then, stops the vacuum head unit 430 and simultaneously operates the 1-1 pressure conveyance module 120 so that the rest of the granular material passes through the first vertical pipe 130 according to the pressure conveyance method by a pressurizing force, the granular material may be stably discharged from the first vertical pipe 130.

Looking at operations of the control unit 460 in more detail, the operations are as follows.

When one pocket communicates with the first granular material line according to rotation of the rotating shaft in the first input valve 114, conveyance of the granular material according to the suction conveyance method, conveyance of the granular material according to the pressure conveyance method, and return of the granular material and gas according to a remaining pressurizing force are sequentially performed.

Once all the granular material has passed through the first vertical pipe 130 by the pressurizing force through the 1-1 pressure conveyance module 120, a blank time may be given until another pocket following the rotation of the rotating shaft communicates with the first granular material line at the lower end of the first vertical pipe 130 and the suction conveyance method proceeds. In this case, a first input opening and closing valve for opening and closing the first granular material line may be provided between the 1-1 pressure conveyance module 120 and the first vertical pipe 130, a first input return line connecting the first granular material line and the first input hopper 111 may be provided between the 1-1 pressure conveyance module 120 and the first input opening and closing valve, and a first input return valve may be provided in the first input return line.

Then, when one pocket starts to communicate with the first granular material line according to the rotation of the rotating shaft, the first input return line is closed or sealed by the first input return valve, the first granular material line is opened by the first input opening and closing valve, and part of the granular material is conveyed according to the suction conveyance method by operating the first vacuum ejector 143 of the first metering module 140. Subsequently, the first input return line is closed or sealed by the first input return valve, and the rest of the granular material is conveyed according to the pressure conveyance method using the 1-1 pressure conveyance module 120 in a state where the first granular material line is open by the first input opening and closing valve.

Next, when the 1-1 pressure conveyance module 120 is stopped in a state where one pocket continues to communicate with the first granular material line, the first granular material line is closed or sealed by the first input opening and closing valve, and the first input return line is open by the first input return valve, the granular material and gas between the first input valve 114 and the first input opening and closing valve are transferred to the first input hopper 111 through the first input return line by the pressurizing force remaining in the first granular material line. In addition, when the first vacuum ejector 143 is operated in a state where one pocket continues to communicate with the first granular material line, the first granular material line is closed or sealed by the first input opening and closing valve, and the first input return line is open by the first input return valve, the suction force in the first vertical pipe 130 may be increased.

Further, when another pocket following the rotation of the rotating shaft starts to communicate with the first granular material line, the above-described operation is repeated.

Since the first metering valve 144 is provided with a plurality of pockets arranged at equal intervals along a circumferential direction around the intermittently rotated rotating shaft, a fixed amount of granular material may be accommodated in a corresponding pocket. In the first metering valve 144, in one pocket, a fixed amount of granular material corresponding to the first metered amount may be accommodated. The capacity of one pocket in the first metering valve 144 may be variously changed depending on the granular material conveying speed or the granular material unit conveyance amount to correspond to the first metered amount.

Since the 1-2 pressure conveyance module 150 supplies process gas or compressed air generated in the system to the granular material intermittently discharged from the first metering hopper 141 of the first metering module 140, the granular material may be stably pressurized in the first granular material line.

Between the first metering valve 144 of the first metering module 140 and the 1-2 pressure conveyance module 150, in order to adjust an internal pressure of the first granular material line, a vent through which gas between the first metering valve 144 and the 1-2 pressure conveyance module 150 is discharged or external gas is injected may be provided.

Second, the second conveyance unit 200 may convey the granular material of a second vertical pipe 230 in two stages. The second conveyance unit 200 may include the granular material metering valve to be described below.

More specifically, when the granular material of the second conveyance unit 200 rises in the second vertical pipe 230 formed long in the height direction, part of the granular material of the second conveyance amount may pass through the second vertical pipe 230 according to the suction conveyance method using a suction force acting on an upper end side of the second vertical pipe 230. Next, a remaining granular material of the second conveyance amount may pass through the second vertical pipe 230 according to the pressure conveyance method using a pressurizing force acting on a lower end side of the second vertical pipe 230.

In this way, since the granular material conveyed from the second conveyance unit 200 passes through the second vertical pipe 230 by sequentially applying the suction conveyance method and the pressure conveyance method based on the second vertical pipe 230, it is possible to implement complete passage of the granular material in the second vertical pipe 230, prevent the granular material from stagnating in the second vertical pipe 230, and prevent the second vertical pipe 230 from being clogged by the granular material.

The second conveyance unit 200 may be operated in four ways as follows.

In a first example, the second conveyance unit 200 may employ a method in which the granular material is sequentially conveyed through a second input module 210 and a second metering module 240.

The second conveyance unit 200 may include the second input module 210 for storing the granular material and metering and discharging the granular material in the second conveyance amount, a 2-1 pressure conveyance module 220 for pressurizing the granular material discharged from the second input module 210 using process gas or compressed air so that the granular material discharged from the second input module 210 is conveyed according to the pressure conveyance method using a pressurizing force, the second vertical pipe 230 formed long in the height direction to form a path through which the granular material discharged from the second input module 210 rises, the second metering module 240 for sucking and storing the granular material discharged from the second input module 210 or the granular material of the second vertical pipe 230 using process gas or compressed air so that the granular material discharged from the second input module 210 is conveyed according to the suction conveyance method using a suction force, and metering and discharging the granular material in the second metered amount using the rotary valve method, and metering and discharging the granular material in a second metered amount using the rotary valve method, and a 2-2 pressure conveyance module 250 for pressurizing the granular material discharged from the second metering module 240 using process gas or compressed air so that the granular material discharged from the second metering module 240 is conveyed according to the pressure conveyance method using a pressurizing force. At least one of the second input module 210 and the second metering module 240 may include the granular material metering valve to be described below.

In this case, based on the second vertical pipe 230, the 2-1 pressure conveyance module 220 is connected to the lower end side of the second vertical pipe 230, and the second input module 210 is connected to the 2-1 pressure conveyance module 220. In addition, based on the second vertical pipe 230, the second metering module 240 is connected to the upper end side of the second vertical pipe 230, and the 2-2 pressure conveyance module 250 is connected to the second metering module 240.

The second input module 210 may include a second input hopper 211 in which the granular material is stored, a second magnetic filter 212 for filtering magnetic foreign substances from the granular material when the granular material is put into the second input hopper 211, a second mesh filter 213 for filtering non-magnetic foreign substances from the granular material when the granular material is put into the second input hopper 211, and a second input valve 214 for metering and discharging the granular material stored in the second input hopper 211 in the second conveyance amount using the rotary valve method. The second input valve 214 may include the granular material metering valve to be described below.

The second input hopper 211 may accommodate all the granular material stored in the granular material bag transferred from the outside through the granular material conveyance module 410. The capacity of the second input hopper 211 may be variously changed depending on the granular material conveying speed or a granular material unit conveyance amount.

The second magnetic filter 212 and the second mesh filter 213 may be disposed at an upper end of the second input hopper 211 while being spaced apart from each other so that foreign substances from the granular material supplied from the granular material bag are filtered.

In one embodiment of the present invention, since the second mesh filter 213 is disposed above the second magnetic filter 212, the second mesh filter 213 may exhibit an effect of crushing the agglomerated granular material, restore the size of the agglomerated granular material to its original state, and improve an effect of filtering magnetic foreign substances in the granular material transferred from the granular material bag.

Since the second input valve 214 is provided with a plurality of pockets arranged at equal intervals along a circumferential direction around the intermittently rotated rotating shaft, a fixed amount of granular material may be accommodated in a corresponding pocket. In the second input valve 214, in one pocket, a fixed amount of granular material corresponding to the second conveyance amount may be accommodated. The capacity of one pocket in the second input valve 214 may be variously changed depending on the granular material conveying speed or the granular material unit conveyance amount to correspond to the second conveyance amount.

Since the 2-1 pressure conveyance module 220 supplies process gas or compressed air generated in the system to the granular material intermittently discharged from the second input hopper 211 of the second input module 210, the granular material may be stably pressurized in the second granular material line.

Between the second input valve 214 of the second input module 210 and the 2-1 pressure conveyance module 220, in order to adjust an internal pressure of the second granular material line, a vent through which gas between the second input valve 214 and the 2-1 pressure conveyance module 220 is discharged or external gas is injected may be provided.

The second vertical pipe 230 forms a part of the second granular material line of the granular material conveyance lines. The second vertical pipe 230 forms the path through which the granular material rises in the height direction of the system in the second granular material line. The second vertical pipe 230 may be formed long in the height direction of the system.

The second metering module 240 may include a second metering hopper 241 in which the granular material conveyed through the second vertical pipe 230 is stored, a second vacuum ejector 243 for sucking the granular material discharged from the second input module 210 according to the suction conveyance method using a suction force and transferring the granular material to the second metering hopper 241, and a second metering valve 244 for metering and discharging the granular material stored in the second metering hopper 241 in the second metered amount using the rotary valve method. The second metering valve 244 may include the granular material metering valve to be described below.

The second metering hopper 241 may sequentially accommodate the granular material transferred through the 2-1 pressure conveyance module 220. The capacity of the second metering hopper 241 may be variously changed depending on the granular material conveying speed or the granular material unit conveyance amount.

The second metering hopper 241 may be provided with a second air unit 242 for dispersing the granular material accommodated in the second metering hopper 241 using process gas. The second air unit 242 may prevent agglomeration of the granular material accommodated in the second metering hopper 241 by injecting process gas into the second metering hopper 241. The second metering hopper 241 may be provided with a vent through which gas in the second metering hopper 241 is discharged or external gas is injected to adjust an internal pressure of the second metering hopper 241.

The second vacuum ejector 243 may include a vacuum tank unit 420 having an inside maintained in a vacuum state by process gas or compressed air, a vacuum head unit 430 for generating the suction force as the process gas or the compressed air is input to maintain the inside of the vacuum tank unit 420 in the vacuum state, a granular material input unit 440 to which the second vertical pipe 230 is connected so that the second vertical pipe 230 communicates with the vacuum tank unit 420, a connection valve unit 450 for communicating between the vacuum tank unit 420 and the second metering hopper 241 in an openable and closable manner, and a control unit 460 for controlling an operating relationship between the second input module 210, the 2-1 pressure conveyance module 220, and the vacuum head unit 430.

The second vacuum ejector 243 has the same configuration as the above-described first vacuum ejector 143 and is given the same reference numerals.

It is preferable that the vacuum tank unit 420 has a cylindrical shape to support the suction force. Since the vacuum jacket unit 421 surrounds and supports the vacuum tank unit 420, deformation of the vacuum tank unit 420 may be prevented and the vacuum tank unit 420 may be protected.

It is advantageous that the vacuum head unit 430 is provided at an upper end of the vacuum tank unit 420. The vacuum head unit 430 may be provided with a gas injection unit 431 into which process gas or compressed air is injected and a gas discharge unit that is spaced apart from the gas injection unit 431 and discharges process gas generated with the generation of the suction force.

The vacuum head unit 430 is provided with a venturi unit (not shown) for providing a suction force to the granular material using the venturi effect using the injected process gas or compressed air to stabilize the suction conveying of the granular material and easily adjust a suction conveying cycle.

The granular material input unit 440 may be provided on a side of the vacuum tank unit 420 or on the upper end of the vacuum tank unit 420 so that the granular material is smoothly conveyed from the second vertical pipe 230.

It is advantageous that the connection valve unit 450 is provided at a lower end of the vacuum tank unit 420. The connection valve unit 450 may include a vacuum buffer unit provided at the lower end of the vacuum tank unit 420 so that a vacuum state of the vacuum tank unit 420 is maintained, a valve body 451 provided at a lower end of the vacuum buffer unit and communicating with the second metering hopper 241 of the second metering module 240, a valve opening and closing unit provided on the valve body 451 to open and close the valve body 451 or to adjust an opening degree of the valve body 451, and an opening and closing driving unit 452 for operating the valve opening and closing unit.

Since the control unit 460 operates the vacuum head unit 430 in a state where the 2-1 pressure conveyance module 220 is stopped so that part of the granular material passes through the second vertical pipe 230 according to the suction conveyance method by a suction force as the granular material is discharged from the second input module 210 and then, stops the vacuum head unit 430 and simultaneously operates the 2-1 pressure conveyance module 220 so that the rest of the granular material passes through the second vertical pipe 230 according to the pressure conveyance method by a pressurizing force, the granular material may be stably discharged from the second vertical pipe 230.

Looking at operations of the control unit 460 in more detail, the operations are as follows.

When one pocket communicates with the second granular material line according to rotation of the rotating shaft in the second input valve 214, conveyance of the granular material according to the suction conveyance method, conveyance of the granular material according to the pressure conveyance method, and return of the granular material and gas according to a remaining pressurizing force are sequentially performed.

Once all the granular material has passed through the second vertical pipe 230 by the pressurizing force through the 2-1 pressure conveyance module 220, a blank time may be given until another pocket following the rotation of the rotating shaft communicates with the second granular material line at the lower end of the second vertical pipe 230 and the suction conveyance method proceeds. In this case, a second input opening and closing valve for opening and closing the second granular material line may be provided between the 2-1 pressure conveyance module 220 and the second vertical pipe 230, and a second input return line connecting the second granular material line and the second input hopper 211 may be provided between the 2-1 pressure conveyance module 220 and the second input opening and closing valve, and a second input return valve may be provided in the second input return line.

Then, when one pocket starts to communicate with the second granular material line according to the rotation of the rotating shaft, the second input return line is closed or sealed by the second input return valve, the second granular material line is opened by the second input opening and closing valve, and part of the granular material is conveyed according to the suction conveyance method by operating the second vacuum ejector 243 of the second metering module 240. Subsequently, the second input return line is closed or sealed by the second input return valve, and the rest of the granular material is conveyed according to the pressure conveyance method using the 2-1 pressure conveyance module 220 in a state where the second granular material line is open by the second input opening and closing valve.

Next, when the 2-1 pressure conveyance module 220 is stopped when one pocket continues to communicate with the second granular material line, the second granular material line is closed or sealed by the second input opening and closing valve, and the second input return line is open by the second input return valve, the granular material and gas between the second input valve 214 and the second input opening and closing valve are transferred to the second input hopper 211 through the second input return line by the remaining pressurizing force. In addition, when the second vacuum ejector 243 is operated in a state where one pocket continues to communicate with the second granular material line, the second granular material line is closed or sealed by the second input opening and closing valve, and the second input return line is open by the second input return valve, the suction force in the second vertical pipe 230 may be increased.

Further, when another pocket following the rotation of the rotating shaft starts to communicate with the second granular material line, the above-described operation is repeated.

Since the second metering valve 244 is provided with a plurality of pockets arranged at equal intervals along a circumferential direction around the intermittently rotated rotating shaft, a fixed amount of granular material may be accommodated in a corresponding pocket. In the second metering valve 244, in one pocket, a fixed amount of granular material corresponding to the second metered amount may be accommodated. The capacity of one pocket in the second metering valve 244 may be variously changed depending on the granular material conveying speed or the granular material unit conveyance amount in the second metered amount.

Since the 2-2 pressure conveyance module 250 supplies process gas or compressed air generated in the system to the granular material intermittently discharged from the second metering hopper 241 of the second metering module 240, the granular material may be stably pressurized in the second granular material line.

Between the second metering valve 244 of the second metering module 240 and the 2-2 pressure conveyance module 250, in order to adjust an internal pressure of the second granular material line, a vent through which gas between the second metering valve 244 and the 2-2 pressure conveyance module 250 is discharged or external gas is injected may be provided.

In a second example, the second conveyance unit 200 may employ a method in which the granular material is sequentially conveyed through the second input module 210 and a silo module 260.

The second conveyance unit 200 may include the second input module 210 for storing the granular material and metering and discharging the granular material in the second conveyance amount, a 2-1 pressure conveyance module 220 for pressurizing the granular material discharged from the second input module 210 using process gas or compressed air so that the granular material discharged from the second input module 210 is conveyed according to the pressure conveyance method using a pressurizing force, the second vertical pipe 230 formed long in the height direction to form a path through which the granular material discharged from the second input module 210 rises, the silo module 260 for sucking and storing the granular material discharged from the second input module 210 or the granular material of the second vertical pipe 230 using process gas or compressed air so that the granular material discharged from the second input module 210 is conveyed according to the suction conveyance method using a suction force, and metering and discharging the granular material in the second metered amount using the feeding method, and metering and discharging the granular material in a second metered amount using the rotary valve method, and a silo pressure conveyance module 270 for pressurizing the granular material discharged from the silo module 260 using process gas or compressed air so that the granular material discharged from the silo module 260 according to conveyed in the pressure conveyance method using a pressurizing force. The second input module 210 may include the granular material metering valve to be described below.

In this case, based on the second vertical pipe 230, the 2-1 pressure conveyance module 220 is connected to the lower end side of the second vertical pipe 230, and the second input module 210 is connected to the 2-1 pressure conveyance module 220. In addition, based on the second vertical pipe 230, the silo module 260 is connected to an upper end side of the second vertical pipe 230, and the silo pressure conveyance module 270 is connected to the silo module 260.

The second input module 210 may include the second input hopper 211 in which the granular material is stored, the second magnetic filter 212 for filtering magnetic foreign substances from the granular material when the granular material is put into the second input hopper 211, the second mesh filter 213 for filtering non-magnetic foreign substances from the granular material when the granular material is put into the second input hopper 211, and the second input valve 214 for metering and discharging the granular material stored in the second input hopper 211 in the second conveyance amount using the rotary valve method. The second input valve 214 may include the granular material metering valve to be described below.

The second input hopper 211 may accommodate all the granular material stored in the granular material bag transferred from the outside through the granular material conveyance module 410. The capacity of the second input hopper 211 may be variously changed depending on the granular material conveying speed or a granular material unit conveyance amount.

The second magnetic filter 212 and the second mesh filter 213 may be disposed at the upper end of the second input hopper 211 while being spaced apart from each other so that foreign substances from the granular material supplied from the granular material bag are filtered.

In one embodiment of the present invention, since the second mesh filter 213 is disposed above the second magnetic filter 212, the second mesh filter 213 may exhibit the effect of crushing the agglomerated granular material, restore the size of the agglomerated granular material to its original state, and improve the effect of filtering magnetic foreign substances in the granular material transferred from the granular material bag.

Since the second input valve 214 is provided with a plurality of pockets arranged at equal intervals along a circumferential direction around the intermittently rotated rotating shaft, a fixed amount of granular material may be accommodated in a corresponding pocket. In the second input valve 214, in one pocket, a fixed amount of granular material corresponding to the second conveyance amount may be accommodated. The capacity of one pocket in the second input valve 214 may be variously changed depending on the granular material conveying speed or the granular material unit conveyance amount to correspond to the second conveyance amount.

Since the 2-1 pressure conveyance module 220 supplies process gas or compressed air generated in the system to the granular material intermittently discharged from the second input hopper 211 of the second input module 210, the granular material may be stably pressurized in the second granular material line.

Between the second input valve 214 of the second input module 210 and the 2-1 pressure conveyance module 220, in order to adjust the internal pressure of the second granular material line, a vent through which gas between the second input valve 214 and the 2-1 pressure conveyance module 220 is discharged or external gas is injected may be provided.

The second vertical pipe 230 forms a part of the second granular material line of the granular material conveyance lines. The second vertical pipe 230 forms the path through which the granular material rises in the height direction of the system in the second granular material line. The second vertical pipe 230 may be formed long in the height direction of the system.

The silo module 260 may include a granular material silo 261 in which the granular material conveyed through the second vertical pipe 230 is stored, a silo vacuum ejector 262 for sucking the granular material discharged from the second input module 210 according to the suction conveyance method using a suction force and transferring the granular material to the granular material silo 261, and a table feeder 263 for metering and discharging the granular material stored in a main silo in the second metered amount using the feeding method.

The granular material silo 261 may sequentially accommodate the granular material transferred through the 2-1 pressure conveyance module 220. The granular material silo 261 accommodates granular materials accommodated in a plurality of granular material bags.

Process gas may be injected into the granular material silo 261 so that the granular material accommodated in the granular material silo 261 is dispersed. The process gas injected into the granular material silo 261 may prevent agglomeration of the granular material accommodated in the granular material silo 261. The granular material silo 261 may be provided with a vent through which gas in the granular material silo 261 is discharged or external gas is injected to adjust an internal pressure of the granular material silo 261.

The silo vacuum ejector 262 may include a vacuum tank unit 420 having an inside maintained in a vacuum state by process gas or compressed air, a vacuum head unit 430 for generating the suction force as the process gas or the compressed air is input to maintain the inside of the vacuum tank unit 420 in the vacuum state, a granular material input unit 440 to which the second vertical pipe 230 is connected so that the second vertical pipe 230 communicates with the vacuum tank unit 420, a connection valve unit 450 for communicating between the vacuum tank unit 420 and the granular material silo 261 in an openable and closable manner, and a control unit 460 for controlling an operating relationship between the second input module 210, the 2-1 pressure conveyance module 220, and the vacuum head unit 430.

The silo vacuum ejector 262 has the same configuration as the above-described first vacuum ejector 143 and is given the same reference numerals.

It is preferable that the vacuum tank unit 420 has a cylindrical shape to support the suction force. Since the vacuum jacket unit 421 surrounds and supports the vacuum tank unit 420, deformation of the vacuum tank unit 420 may be prevented and the vacuum tank unit 420 may be protected.

It is advantageous that the vacuum head unit 430 is provided at the upper end of the vacuum tank unit 420. The vacuum head unit 430 may be provided with the gas injection unit 431 into which process gas or compressed air is injected and the gas discharge unit that is spaced apart from the gas injection unit 431 and discharges process gas generated with the generation of the suction force.

The vacuum head unit 430 is provided with the venturi unit (not shown) for providing a suction force to the granular material using the venturi effect using the injected process gas or compressed air to stabilize the suction conveying of the granular material and easily adjust the suction conveying cycle.

The granular material input unit 440 may be provided on a side of the vacuum tank unit 420 or on the upper end of the vacuum tank unit 420 so that the granular material is smoothly conveyed from the second vertical pipe 230.

It is advantageous that the connection valve unit 450 is provided at the lower end of the vacuum tank unit 420. The connection valve unit 450 may include the vacuum buffer unit provided at the lower end of the vacuum tank unit 420 so that a vacuum state of the vacuum tank unit 420 is maintained, a valve body 451 provided at the lower end of the vacuum buffer unit and communicating with the granular material silo 261 of the silo module 260, the valve opening and closing unit provided on the valve body 451 to open and close the valve body 451 or to adjust the opening degree of the valve body 451, and the opening and closing driving unit 452 for operating the valve opening and closing unit.

Since the control unit 460 operates the vacuum head unit 430 in a state where the 2-1 pressure conveyance module 220 is stopped so that part of the granular material passes through the second vertical pipe 230 according to the suction conveyance method by a suction force as the granular material is discharged from the second input module 210 and then, stops the vacuum head unit 430 and simultaneously operates the 2-1 pressure conveyance module 220 so that the rest of the granular material passes through the second vertical pipe 230 according to the pressure conveyance method by a pressurizing force, the granular material may be stably discharged from the second vertical pipe 230.

Looking at operations of the control unit 460 in more detail, the operations are as follows.

When one pocket communicates with the second granular material line according to rotation of the rotating shaft in the second input valve 214, conveyance of the granular material according to the suction conveyance method, conveyance of the granular material according to the pressure conveyance method, and return of the granular material and gas according to a remaining pressurizing force are sequentially performed.

Once all the granular material has passed through the second vertical pipe 230 by the pressurizing force through the 2-1 pressure conveyance module 220, a blank time may be given until another pocket following the rotation of the rotating shaft communicates with the second granular material line at the lower end of the second vertical pipe 230 and the suction conveyance method proceeds. In this case, the second input opening and closing valve for opening and closing the second granular material line may be provided between the 2-1 pressure conveyance module 220 and the second vertical pipe 230, and the second input return line connecting the second granular material line and the second input hopper 211 may be provided between the 2-1 pressure conveyance module 220 and the second input opening and closing valve, and the second input return valve may be provided in the second input return line.

Then, when one pocket starts to communicate with the second granular material line according to the rotation of the rotating shaft, the second input return line is closed or sealed by the second input return valve, the second granular material line is opened by the second input opening and closing valve, and part of the granular material is conveyed according to the suction conveyance method by operating the second vacuum ejector 243 of the second metering module 240. Subsequently, the second input return line is closed or sealed by the second input return valve, and the rest of the granular material is conveyed according to the pressure conveyance method using the 2-1 pressure conveyance module 220 in the state where the second granular material line is open by the second input opening and closing valve.

Next, when the 2-1 pressure conveyance module 220 is stopped in a state where one pocket continues to communicate with the second granular material line, the second granular material line is closed or sealed by the second input opening and closing valve, and the second input return line is open by the second input return valve, the granular material and gas between the second input valve 214 and the second input opening and closing valve are transferred to the second input hopper 211 through the second input return line by the remaining pressurizing force. In addition, when the second vacuum ejector 243 is operated in the state where one pocket continues to communicate with the second granular material line, the second granular material line is closed or sealed by the second input opening and closing valve, and the second input return line is open by the second input return valve, the suction force in the second vertical pipe 230 may be increased.

Further, when another pocket following the rotation of the rotating shaft starts to communicate with the second granular material line, the above-described operation is repeated.

A table feeder 263 may include a first feeder valve provided at a lower end of the granular material silo 261, a granular material storage provided at a lower end of the feeder valve to accommodate the granular material in an amount corresponding to the second metered amount, and a second feeder valve provided at a lower end of the granular material storage.

Then, when the first feeder valve is opened in a state where the lower end of the granular material storage is closed or sealed by the second feeder valve, the granular material in the granular material silo 261 is moved to the granular material storage and the granular material storage accommodates the granular material in the amount corresponding to the second metered amount. When the second feeder valve is opened in a state where the first feeder valve is closed or sealed, the granular material accommodated in the granular material storage in the amount corresponding to the second metered amount may be transferred to the second granular material line. Further, after the second feeder valve is closed or sealed, the granular material of the second granular material line may be conveyed to the silo pressure conveyance module 270 according to the pressure conveyance method.

Since the silo pressure conveyance module 270 supplies process gas or compressed air generated in the system to the granular material intermittently discharged from the granular material silo 261 of the silo module 260, the granular material may be stably pressurized in the second granular material line.

Between the table feeder 263 of the silo module 260 and the silo pressure conveyance module 270, in order to adjust the internal pressure of the second granular material line, the vent through which gas between the table feeder 263 and the silo pressure conveyance module 270 is discharged or external gas is injected may be provided.

In a third example, the second conveyance unit 200 may employ a method in which the granular material is sequentially conveyed through the silo module 260 and the second metering module 240.

The second conveyance unit 200 may include the silo module 260 for storing the granular material and metering and discharging the granular material in the second conveyance amount using the feeding method, the silo pressure conveyance module 270 for pressurizing the granular material discharged from the silo module 260 using process gas or compressed air so that the granular material discharged from the second metering module 240 is conveyed according to the pressure conveyance method using a pressurizing force, the second vertical pipe 230 formed long in the height direction to form the path through which the granular material discharged from the silo module 260 rises, the second metering module 240 for sucking and storing the granular material discharged from the silo module 260 or the granular material of the second vertical pipe 230 using process gas or compressed air so that the granular material discharged from the silo module 260 is conveyed according to the suction conveyance method using a suction force, and metering and discharging the granular material in the second metered amount using the rotary valve method, and the 2-2 pressure conveyance module 250 for pressurizing the granular material discharged from the second metering module 240 using process gas or compressed air so that the granular material discharged from the second metering module 240 is conveyed according to the pressure conveyance method using a pressurizing force. The second metering module 240 may include the granular material metering valve to be described below.

In this case, based on the second vertical pipe 230, the silo pressure conveyance module 270 is connected to the lower end side of the second vertical pipe 230, and the silo module 260 is connected to the silo pressure conveyance module 270. In addition, based on the second vertical pipe 230, the second metering module 240 is connected to the upper end side of the second vertical pipe 230, and the 2-2 pressure conveyance module 250 is connected to the second metering module 240.

The silo module 260 may include the granular material silo 261 in which the granular material conveyed through the second vertical pipe 230 is stored, and the table feeder 263 for metering and discharging the granular material stored in the main silo in the second metered amount using the feeding method.

The silo module 260 may further include a silo magnetic filter for filtering magnetic foreign substances from the granular material when the granular material is input into the granular material silo 261, and a silo mesh filter for filtering non-magnetic foreign substances from the granular material when the granular material is input into the granular material silo 261.

In the third example, it is preferable that the silo vacuum ejector 262 described above is omitted in the silo module 260.

The granular material silo 261 may accommodate all the granular material stored in the granular material bag transferred from the outside through the granular material conveyance module 410. The granular material silo 261 accommodates granular materials accommodated in a plurality of granular material bags.

Process gas may be injected into the granular material silo 261 so that the granular material accommodated in the granular material silo 261 is dispersed. The process gas injected into the granular material silo 261 may prevent agglomeration of the granular material accommodated in the granular material silo 261. The granular material silo 261 may be provided with the vent through which gas in the granular material silo 261 is discharged or external gas is injected to adjust an internal pressure of the granular material silo 261.

The silo magnetic filter and the silo mesh filter may be disposed at an upper end of the granular material silo 261 while being spaced apart from each other so that foreign substances from the granular material supplied from the granular material bag are filtered.

In one embodiment of the present invention, since the silo mesh filter is disposed above the silo magnetic filter, the second mesh filter 213 may exhibit the effect of crushing the agglomerated granular material, restore the size of the agglomerated granular material to its original state, and improve the effect of filtering magnetic foreign substances in the granular material transferred from the granular material bag.

The table feeder 263 may include the first feeder valve provided at the lower end of the granular material silo 261, the granular material storage provided at the lower end of the feeder valve to accommodate the granular material in the amount corresponding to the second conveyance amount, and the second feeder valve provided at a lower end of the granular material storage.

Then, when the first feeder valve is opened in a state where the lower end of the granular material storage is closed or sealed by the second feeder valve, the granular material in the granular material silo 261 is moved to the granular material storage and the granular material storage accommodates the granular material in the amount corresponding to the second conveyance amount. When the second feeder valve is opened in the state where the first feeder valve is closed or sealed, the granular material accommodated in the granular material storage in the amount corresponding to the second conveyance amount may be transferred to the second granular material line. Further, after the second feeder valve is closed or sealed, the granular material of the second granular material line may be conveyed to the silo pressure conveyance module 270 according to the pressure conveyance method.

Since the silo pressure conveyance module 270 supplies process gas or compressed air generated in the system to the granular material intermittently discharged from the granular material silo 261 of the silo module 260, the granular material may be stably pressurized in the second granular material line.

Between the table feeder 263 of the silo module 260 and the silo pressure conveyance module 270, in order to adjust the internal pressure of the second granular material line, the vent through which gas between the table feeder 263 and the silo pressure conveyance module 270 is discharged or external gas is injected may be provided.

The second vertical pipe 230 forms a part of the second granular material line of the granular material conveyance lines. The second vertical pipe 230 forms the path through which the granular material rises in the height direction of the system in the second granular material line. The second vertical pipe 230 may be formed long in the height direction of the system.

The second metering module 240 may include the second metering hopper 241 in which the granular material conveyed through the second vertical pipe 230 is stored, the second vacuum ejector 243 for sucking the granular material discharged from the second input module 210 according to the suction conveyance method using a suction force and transferring the granular material to the second metering hopper 241, and the second metering valve 244 for metering and discharging the granular material stored in the second metering hopper 241 in the second metered amount using the rotary valve method. The second metering valve 244 may include the granular material metering valve to be described below.

The second metering hopper 241 may sequentially accommodate the granular material transferred through the silo pressure conveyance module 270. The capacity of the second metering hopper 241 may be variously changed depending on the granular material conveying speed or the granular material unit conveyance amount.

The second metering hopper 241 may be provided with the second air unit 242 for dispersing the granular material accommodated in the second metering hopper 241 using process gas. The second air unit 242 may prevent agglomeration of the granular material accommodated in the second metering hopper 241 by injecting process gas into the second metering hopper 241. The second metering hopper 241 may be provided with the vent through which gas in the second metering hopper 241 is discharged or external gas is injected to adjust an internal pressure of the second metering hopper 241.

The second vacuum ejector 243 may include the vacuum tank unit 420 having the inside maintained in the vacuum state by process gas or compressed air, the vacuum head unit 430 for generating the suction force as the process gas or the compressed air is input to maintain the inside of the vacuum tank unit 420 in the vacuum state, the granular material input unit 440 to which the second vertical pipe 230 is connected so that the second vertical pipe 230 communicates with the vacuum tank unit 420, the connection valve unit 450 for communicating between the vacuum tank unit 420 and the second metering hopper 241 in the openable and closable manner, and the control unit 460 for controlling an operating relationship between the silo module 260, the silo pressure conveyance module 270, and the vacuum head unit 430.

The second vacuum ejector 243 has the same configuration as the above-described first vacuum ejector 143 and is given the same reference numerals.

It is preferable that the vacuum tank unit 420 has a cylindrical shape to support the suction force. Since the vacuum jacket unit 421 surrounds and supports the vacuum tank unit 420, deformation of the vacuum tank unit 420 may be prevented and the vacuum tank unit 420 may be protected.

It is advantageous that the vacuum head unit 430 is provided at the upper end of the vacuum tank unit 420. The vacuum head unit 430 may be provided with the gas injection unit 431 into which process gas or compressed air is injected and the gas discharge unit that is spaced apart from the gas injection unit 431 and discharges process gas generated with the generation of the suction force.

The vacuum head unit 430 is provided with the venturi unit (not shown) for providing a suction force to the granular material using the venturi effect using the injected process gas or compressed air to stabilize the suction conveying of the granular material and easily adjust the suction conveying cycle.

The granular material input unit 440 may be provided on a side of the vacuum tank unit 420 or on the upper end of the vacuum tank unit 420 so that the granular material is smoothly conveyed from the second vertical pipe 230.

It is advantageous that the connection valve unit 450 is provided at the lower end of the vacuum tank unit 420. The connection valve unit 450 may include the vacuum buffer unit provided at the lower end of the vacuum tank unit 420 so that a vacuum state of the vacuum tank unit 420 is maintained, the valve body 451 provided at the lower end of the vacuum buffer unit and communicating with the second metering hopper 241 of the second metering module 240, the valve opening and closing unit provided on the valve body 451 to open and close the valve body 451 or to adjust the opening degree of the valve body 451, and the opening and closing driving unit 452 for operating the valve opening and closing unit.

Since the control unit 460 operates the vacuum head unit 430 in a state where the silo pressure conveyance module 270 is stopped so that part of the granular material passes through the second vertical pipe 230 according to the suction conveyance method by a suction force as the granular material is discharged from the silo module 260, and then, stops the vacuum head unit 430 and simultaneously operates the silo pressure conveyance module 270 so that the rest of the granular material passes through the second vertical pipe 230 according to the pressure conveyance method by a pressurizing force, the granular material may be stably discharged from the second vertical pipe 230.

Looking at operations of the control unit 460 in more detail, the operations are as follows.

In a silo feeder, when the granular material storage communicates with the second granular material line as the second feeder valve is opened, the conveyance of the granular material according to the suction conveyance method and the conveyance of the granular material according to the pressure conveyance method are sequentially performed.

Once all the granular material has passed through the second vertical pipe 230 by the pressurizing force through the silo pressure conveyance module 270, since the second feeder valve is opened, the granular material storage communicates with the second vertical pipe 230, and the granular material in the granular material storage is discharged to the second granular material line. In this case, between the silo pressure conveyance module 270 and the second vertical pipe 230, an input opening and closing valve for opening and closing the second granular material line may be provided.

Then, when the granular material in the granular material storage is discharged to the second granular material line, the second granular material line is opened by the input opening and closing valve and the second vacuum ejector 243 of the second metering module 240 is operated so that part of the granular material is conveyed according to the suction conveyance method. In this case, since all the granular material in the granular material storage is discharged to the second granular material line during a granular material suction conveyance process, the second feeder valve is switched to a closed or sealed state. Subsequently, in a state where the second granular material line is open by the input opening and closing valve and the second feeder valve is closed or sealed, the rest of the granular material is conveyed according to the pressure conveyance method using the silo pressure conveyance module 270.

Next, when the silo pressure conveyance module 270 is stopped and simultaneously, the second granular material line is closed or sealed by the input opening and closing valve, and the second feeder valve is opened, the granular material and gas between the second feeder valve and the input opening and closing valve may be transferred to the granular material silo 261 by the remaining pressurizing force, the second feeder valve may be closed or sealed for a subsequent operation, and a subsequent granular material may be introduced into the granular material silo 261 when the first feeder valve is opened. In addition, when the second vacuum ejector 243 is operated in a state where the silo pressure conveyance module 270 is stopped and simultaneously the second granular material line is closed or sealed by the input opening and closing valve, the suction force in the second vertical pipe 230 may be improved.

Since the second metering valve 244 is provided with a plurality of pockets arranged at equal intervals along a circumferential direction around the intermittently rotated rotating shaft, a fixed amount of granular material may be accommodated in a corresponding pocket. In the second metering valve 244, in one pocket, a fixed amount of granular material corresponding to the second metered amount may be accommodated. The capacity of one pocket in the second metering valve 244 may be variously changed depending on the granular material conveying speed or the granular material unit conveyance amount in the second metered amount.

Since the 2-2 pressure conveyance module 250 supplies process gas or compressed air generated in the system to the granular material intermittently discharged from the second metering hopper 241 of the second metering module 240, the granular material may be stably pressurized in the second granular material line.

Between the second metering valve 244 of the second metering module 240 and the 2-2 pressure conveyance module 250, in order to adjust the internal pressure of the second granular material line, the vent through which gas between the second metering valve 244 and the 2-2 pressure conveyance module 250 is discharged or external gas is injected may be provided.

In a fourth example, the second conveyance unit 200 may employ a method in which the granular material is sequentially conveyed through the second input module 210, the silo module 260, and the second metering module 240. In this case, the second vertical pipe 230 may be divided into a 2-1 vertical pipe and a 2-2 vertical pipe.

The second conveyance unit 200 may include the second input module 210 for storing the granular material and metering and discharging the granular material in the second conveyance amount, the 2-1 pressure conveyance module 220 for pressurizing the granular material discharged from the second input module 210 using process gas or compressed air so that the granular material discharged from the second input module 210 is conveyed according to the pressure conveyance method using a pressurizing force, the 2-1 vertical pipe formed long in the height direction to form a path through which the granular material discharged from the second input module 210 rises, the silo module 260 for storing the granular material and metering and discharging the granular material in the second conveyance amount using the feeding method, the silo pressure conveyance module 270 for pressurizing the granular material discharged from the silo module 260 using process gas or compressed air so that the granular material discharged from the silo module 260 is conveyed according to the pressure conveyance method using a pressurizing force, the 2-2 vertical pipe formed long in the height direction to form a path through which the granular material discharged from the silo module 260 rises, the second metering module 240 for sucking and storing the granular material discharged from the silo module 260 or the granular material of the second vertical pipe 230 using process gas or compressed air so that the granular material discharged from the silo module 260 is conveyed according to the suction conveyance method using a suction force, and metering and discharging the granular material in the second metered amount using the rotary valve method, and the 2-2 pressure conveyance module 250 for pressurizing the granular material discharged from the second metering module 240 using process gas or compressed air so that the granular material discharged from the second metering module 240 is conveyed according to the pressure conveyance method using a pressurizing force. At least one of the second input module 210 and the second metering module 240 may include the granular material metering valve to be described below.

In this case, based on the 2-1 vertical pipe, the 2-1 pressure conveyance module 220 is connected to the lower end side of the 2-1 vertical pipe, and the second input module 210 is connected to the 2-1 pressure conveyance module 220. In addition, based on the 2-1 vertical pipe, the silo module 260 is connected to an upper end side of the 2-1 vertical pipe, and the silo pressure conveyance module 270 is connected to the silo module 260. In addition, based on the 2-2 vertical pipe, the silo pressure conveyance module 270 is connected to a lower end side of the 2-2 vertical pipe, and the silo module 260 is connected to the silo pressure conveyance module 270. In addition, based on the 2-2 vertical pipe, the second metering module 240 is connected to an upper end side of the 2-2 vertical pipe, and the 2-2 pressure conveyance module 250 is connected to the second metering module 240.

Then, the structure and operation of the second conveyance unit 200 according to the second example are applied to the structure and operation of the second conveyance unit 200 according to the second example are applied to a conveying structure of the granular material and the conveying relationship of the granular material from the second input module 210 to the silo module 260, and the structure and operation of the second conveyance unit 200 according to the third example are applied to a conveying structure of the granular material and the conveying relationship of the granular material from the silo module 260 to the 2-2 pressure conveyance module 250, so that the description of the second conveyance unit 200 according to the fourth example will be omitted.

However, the 2-1 vertical pipe forms a part of the second granular material line of the granular material conveyance lines. The 2-1 vertical pipe forms a path through which the granular material rises in the height direction of the system in the second granular material line. The 2-1 vertical pipe may be formed long in the height direction of the system.

In addition, the 2-2 vertical pipe is spaced apart from the 2-1 vertical pipe and forms a part of the second granular material line of the granular material conveyance lines. The 2-2 vertical pipe forms a path through which the granular material rises in the height direction of the system in the second granular material line. The 2-2 vertical pipe may be formed long in the height direction of the system.

In addition, the granular material discharged from the table feeder 263 according to the fourth example may be metered and discharged in the second conveyance amount.

In addition, the second conveyance unit 200 according to the fourth example may further include a connecting pipe, a first three-way valve, and a second three-way valve. Both ends of the connecting pipe are connected to the upper end of the 2-1 vertical pipe and a middle of the 2-2 vertical pipe, or connected to the upper end of the 2-1 vertical pipe and the upper end of the 2-2 vertical pipe, respectively. The 2-1 vertical pipe, the connecting pipe, and the second granular material line connected to the silo vacuum ejector 262 of the silo module 260 are each connected to the first three-way valve, and the connecting pipe, the 2-2 vertical pipe, and the second granular material line connected to the second vacuum ejector 243 of the second metering module 240 are each connected to the second three-way valve.

Then, when the first three-way valve connects the 2-1 vertical pipe and the second granular material line connected to the silo vacuum ejector 262 of the silo module 260 and the second three-way valve connects the 2-2 vertical pipe and the second granular material line connected to the second vacuum ejector 243 of the second metering module 240, a granular material conveying structure in which the granular material according to the fourth example sequentially passes through the second input module 210, the silo module 260, and the second metering module 240 may be shown. In addition, when the first three-way valve connects the 2-1 vertical pipe and the connecting pipe and the second three-way valve connects the connecting pipe and the second granular material line connected to the second vacuum ejector 243 of the second metering module 240, a granular material conveying structure in which the granular material according to the fourth example passes through the second input module 210 and the second metering module 240 without passing through the silo module 260, like the granular material according to the first example, may be shown.

Third, the third conveyance unit 300 may convey the granular material of a third vertical pipe according to the pressure conveyance method.

The third conveyance unit 300 may be used to additionally input a granular material to correspond to the granular material conveyed by any one of the first conveyance unit 100 and the second conveyance unit 200. The third conveyance unit 300 may be used when the granular material is input in the first conveyance amount or the second conveyance amount to correspond to maintenance of the first conveyance unit 100 and the second conveyance unit 200.

It is advantageous that the third conveyance unit 300 is installed in parallel with any one of the first conveyance unit 100 and the second conveyance unit 200.

The third conveyance unit 300 may include a third input module 310 for storing the granular material and metering and discharging the granular material in the third conveyance amount and a third pressure conveyance module 320 for pressurizing the granular material discharged from the third input module 310 using process gas or compressed air so that the granular material discharged from the third input module 310 is conveyed according to a pressure conveyance method using a pressurizing force.

The third input module 310 may further include a third input hopper 311 in which the granular material is stored, a third magnetic filter 312 for filtering magnetic foreign substances from the granular material when the granular material is put into the third input hopper 311, and a third mesh filter 313 for filtering non-magnetic foreign substances from the granular material when the granular material is put into the third input hopper 311, and may further include a third input valve for metering and discharging the granular material stored in the third input hopper 311 in the third conveyance amount using the rotary valve method. The third input valve may include the granular material metering valve to be described below.

The third input hopper 311 may accommodate all the granular material stored in the granular material bag transferred from the outside through the granular material conveyance module 410. A granular material to be separately transferred may be accommodated in the third input hopper 311. The capacity of the third input hopper 311 may be variously changed depending on the granular material conveying speed or a granular material unit conveyance amount.

The third magnetic filter 312 and the third mesh filter 313 may be disposed at an upper end of the third input hopper 311 while being spaced apart from each other so that foreign substances from the granular material supplied from the granular material bag are filtered.

In one embodiment of the present invention, since the third mesh filter 313 is disposed above the third magnetic filter 312, the third mesh filter 313 may exhibit an effect of crushing the agglomerated granular material, restore the size of the agglomerated granular material to its original state, and improve an effect of filtering magnetic foreign substances in the granular material transferred from the granular material bag or the granular material that is separately transferred.

Since the third input valve is provided with a plurality of pockets arranged at equal intervals along a circumferential direction around the intermittently rotated rotating shaft, a fixed amount of granular material may be accommodated in a corresponding pocket. In the third input valve, in one pocket, a fixed amount of granular material corresponding to the third conveyance amount may be accommodated. The capacity of one pocket in the third input valve may be variously changed depending on the granular material conveying speed or the granular material unit conveyance amount to correspond to the third conveyance amount.

Since the third pressure conveyance module 320 supplies process gas or compressed air generated in the system to the granular material intermittently discharged from the third input hopper 311 of the third input module 310, the granular material may be stably pressurized in the third granular material line.

Between the third input valve of the third input module 310 and the third pressure conveyance module 320, in order to adjust an internal pressure of the third granular material line, a vent through which gas between the third input valve and the third pressure conveyance module 320 is discharged or external gas is injected may be provided.

The third conveyance unit 300 may further include the third vertical pipe formed long in the height direction to form a path through which the granular material discharged from the third input module 310 rises. Since a height of the third vertical pipe is smaller than that of the first vertical pipe 130 or the second vertical pipe 230, the granular material may be conveyed only by the third pressure conveyance module 320.

The third vertical pipe forms a part of the third granular material line of the granular material conveyance lines. The third vertical pipe forms a path through which the granular material rises in the height direction of the system in the third granular material line. The third vertical pipe may be formed long in the height direction of the system.

The smart granular raw material conveyance system according to one embodiment of the present invention may further include the binder conveyance unit 500 and the solvent conveyance unit 600. In this case, the granular material may be made of an active material that is a raw material of the electrode.

The binder conveyance unit 500 converts a binder to be mixed with the active material into a liquid solution in an amount corresponding to a binder conveyance amount and conveys the converted binder.

The binder conveyance unit 500 may include a binder input module 510 for storing the binder and metering and discharging the binder according to the binder conveyance amount, a binder pressure conveyance module 520 for pressurizing the binder discharged from the binder input module 510 using process gas or compressed air so that the binder discharged from the binder input module 510 is conveyed according to the pressure conveyance method using a pressurizing force, a binder mixing module 530 for mixing the binder transferred through the binder pressure conveyance module 520 and a solvent transferred through the solvent conveyance unit 600 to form the solution, a solution conveyance module for pumping the solution, a solution hopper scale 560 for storing the solution transferred from the solution conveyance module and discharging the solution in a fixed amount corresponding to a conveyance amount of the solution, and a solution supply pump 570 for pumping the solution of the solution hopper scale 560 in an amount corresponding to the conveyance amount of the solution.

The binder input module 510 may include a binder input hopper 511 in which the granular material is stored, a binder magnetic filter 512 for filtering magnetic foreign substances from the granular material when the granular material is put into the binder input hopper 511, a binder mesh filter 513 for filtering non-magnetic foreign substances from the granular material when the granular material is put into the binder input hopper 511, and a binder input valve 514 for metering and discharging the granular material stored in the binder input hopper 511 in the binder conveyance amount using the rotary valve method.

The binder input hopper 511 may accommodate all binders stored in a binder bag transferred from the outside through the binder conveyance module. The capacity of the binder input hopper 511 may be variously changed depending on a binder conveying speed and a binder unit conveyance amount. Process gas or compressed air may be supplied to the binder input hopper 511 to stabilize a storage state of the binder.

The binder magnetic filter 512 and the binder mesh filter 513 may be disposed at an upper end of the binder input hopper 511 while being spaced apart from each other so that foreign substances from the binder supplied from the binder bag are filtered.

In one embodiment of the present invention, since the binder mesh filter 513 is disposed above the binder magnetic filter 512, 541, the binder mesh filter 513 may exhibit an effect of crushing the agglomerated binder, restore the size of the agglomerated binder to its original state, and improve an effect of filtering magnetic foreign substances in the binder transferred from the binder.

Since the binder input valve 514 is provided with a plurality of pockets arranged at equal intervals along a circumferential direction around the intermittently rotated rotating shaft, a fixed amount of granular material may be accommodated in a corresponding pocket. In the binder input valve 514, in one pocket, a fixed amount of binder corresponding to the binder conveyance amount may be accommodated. The capacity of one pocket in the binder input valve 514 may be variously changed depending on the binder conveying speed and the binder unit conveyance amount to correspond to the binder conveyance amount.

Since the binder pressure conveyance module 520 supplies process gas or compressed air generated in the system to the binder intermittently discharged from the binder input hopper 511 of the binder input module 510, the binder may be stably pressurized in the binder conveyance line.

Between the binder input valve 514 of the binder input module 510 and the binder pressure conveyance module 520, in order to adjust an internal pressure of the binder conveyance line, a vent through which gas between the binder input valve 514 and the binder pressure conveyance module 520 is discharged or external gas is injected may be provided.

The binder mixing module 530 accommodates the solvent supplied through a mixing adjustment module 650 of the solvent conveyance unit 600 together with the binder.

The binder mixing module 530 may include a binder mixer 531 in which the binder and the solvent are accommodated in a predetermined ratio and a binder agitator 532 for mixing the binder and the solvent while rotating inside the binder mixer 531 to form a liquid solution.

The binder mixing module 530 may further include a temperature controller 533 for receiving the solvent or solution from the binder mixer 531, heating the received solvent or solution, and supplying the solvent or solution to the binder mixer 531 again. The temperature controller 533 may be supplied with chiller water transferred from a main process unit for forming an electrode with a slurry so that the concentration of the solution or the temperature of the temperature controller 533 is adjusted.

The binder mixing module 530 may include a binder vent unit 580 through which gas from the binder mixer 531 is collected and discharged. Then, the internal pressure of the binder mixer 531 may be adjusted, and the solution may be stabilized. The binder vent unit 580 may include a binder vent line 581 connecting the binder mixer 531 and a separate storage space, a binder filter line 582 spaced apart from the binder vent line 581 and connecting the binder mixer 531 and the binder vent line 581, and a binder vent filter 583 provided in the binder filter line 582 and filtering gas of the binder mixer 531.

In this case, since the binder vent line 581 and the binder filter line 582 are provided with binder on-off valves, respectively, a line through which the gas of the binder mixer 531 passes may be selected depending on whether the binder on-off valves are opened or closed.

The solution conveyance module may include a solution conveyance pump 542 for pumping the solution of the binder mixing module 530. Process gas or compressed air may be supplied to the solution conveyance pump 542 so that the solution is smoothly conveyed.

The solution conveyance module may further include at least one of a solution magnetic filter 541 for filtering magnetic foreign substances from the solution when the solution is transferred to the solution hopper scale 560 and a cobetter filter 543 for filtering non-magnetic foreign substances from the solution when the solution is transferred to the solution hopper scale. In one embodiment of the present invention, the solution magnetic filter 541 may be provided between the binder mixing module 530 and the solution conveyance pump 542 to prevent damage to the solution conveyance pump 542 due to magnetic foreign substances, and the cobetter filter 543 may be provided between the solution conveyance pump 542 and the solution hopper scale 560 to prevent foreign substances from being transferred to the solution hopper scale 560.

The cobetter filter 543 may be the above-described mesh filter. The cobetter filter 543 may filter non-magnetic foreign substances in a liquid solution.

The binder conveyance unit 500 may further include a first solution line 501 for returning the solution provided between the solution conveyance pump 542 and the cobetter filter 543 to the binder mixing module 530. In addition, depending on the opening and closing operation of a solution three-way valve connecting the on-off valve or the solution conveyance pump 542 provided in each line, the cobetter filter 543, and the first solution line 501, the solution may be transferred to the solution hopper scale 560 or transferred to the first solution line 501.

The solution hopper scale 560 automatically meters the amount of liquid solution. Compressed air or process gas may be supplied to the solution hopper scale 560 so that a mixed state of the solution is stably maintained. The solution hopper scale 560 may allow internal gas to be smoothly discharged. The solvent transferred through an auxiliary adjusting module 660 of the solvent conveyance unit 600 to be described below may be supplied to the solution hopper scale 560. Together with the solution hopper scale 560, the binder conveyance unit 500 may further include a binder bulk conveyance module for supplying the solution supplied to a mixing unit 900 to be described below to the solution hopper scale 560 again.

The binder bulk conveyance module may include a bulk binder 551 in which a residue of the solution supplied to the mixing unit 900 to be described below is stored and a binder bulk conveyance pump 552 for supplying the solution of the bulk binder 551 to the solution hopper scale 560. Process gas or compressed air may be supplied to the binder bulk conveyance pump 552 so that the binder bulk conveyance pump 552 is smoothly operated.

The solution supply pump 570 may transfer the solution of the solution hopper scale 560 to the mixing unit 900 to be described below. Process gas or compressed air may be supplied to the solution supply pump 570 so that the solution is stably conveyed.

The binder conveyance unit 500 may further include a second solution line 502 for returning the solution provided between the solution supply pump 570 and the mixing unit 900 to be described below to the solution hopper scale 560. The binder conveyance unit 500 may further include a third solution line 503 directly connecting the solution hopper scale 560 and the mixing unit 900 to be described below so that the solution discharged from the solution hopper scale 560 is directly transferred to the mixing unit 900 to be described below.

The solvent conveyance unit 600 conveys a solvent for forming the solution by dissolving the binder in an amount corresponding to a solvent conveyance amount.

The solvent conveyance unit 600 may include a solvent tank 610 in which the solvent is stored, a solvent pumping module for pumping the solvent stored in the solvent tank 610, a mixing adjustment module 650 for adjusting the solvent to be mixed with the binder to dissolve the binder, and a slurry adjusting module 670 for adjusting the solvent mixed in the slurry to adjust the concentration of the slurry to form the electrode.

The solvent tank 610 may allow internal gas to be smoothly discharged.

The solvent pumping module may include a solvent pump 640 for pumping the solvent in the solvent tank 610. Process gas or compressed air may be supplied to the solvent pump 640 so that the solvent is smoothly conveyed.

The solvent pumping module may further include at least one of a solvent magnetic filter 620 for filtering magnetic foreign substances from the solvent when pumping the solvent and a solvent mesh filter 630 for filtering non-magnetic foreign substances from the solvent when pumping the solvent.

In one embodiment of the present invention, the solvent magnetic filter 620 may be provided between the solvent tank 610 and the solvent pump 640 to prevent damage to the solvent pump 640 due to magnetic foreign substances, and the solvent mesh filter 630 may be provided between the solvent magnetic filter 620 and the solvent pump 640 to prevent foreign substances from being transferred to the solvent pump 640.

Since the mixing adjustment module 650 adjusts the amount of the solvent transferred to the binder mixing module 530 of the binder conveyance unit 500, the dissolution of the binder may be stabilized.

Since the slurry adjusting module 670 adjusts the amount of the solvent transferred to the mixing unit 900 to be described below, the slurry may be stabilized, and the concentration of the slurry may be adjusted.

The solvent conveyance unit 600 may further include the auxiliary adjusting module 660 for adjusting the solvent transferred to at least one of the conductive material conveyance unit 700 to be described below, the dispersant conveyance unit 800, and the solution hopper scale 560 of the binder conveyance unit 500.

The solvent discharged through the solvent pump 640 may be returned to the solvent tank 610 through the first solvent line 601 branched from the solvent conveyance line.

The solvent discharged through the solvent pump 640 is transferred to at least one of the mixing adjustment module 650, the auxiliary adjusting module 660, and the slurry adjusting module 670 through the second solvent line 602 connected to the solvent conveyance line.

The solvent passing through the auxiliary adjusting module 660 is transferred to at least one of the conductive material conveyance unit 700, the dispersant conveyance unit 800, and the solution hopper scale 560 of the binder conveyance unit 500 through the third solvent line 603.

Each of the adjusting modules described above may be provided with an adjusting valve so that selection as to whether or not to transfer the solvent is performed or the conveyance amount of solvent to be transferred is adjusted.

Compressed air may be supplied to the solvent that passing through each of the above-described adjusting modules so that the solvent is smoothly conveyed.

The smart granular raw material conveyance system according to one embodiment of the present invention may further include at least one of the conductive material conveyance unit 700 and the dispersant conveyance unit 800.

The conductive material conveyance unit 700 may convey a conductive material to be mixed with a slurry for forming the electrode in an amount corresponding to a conductive material conveyance amount.

The conductive material conveyance unit 700 may include a conductive material hopper scale 710 in which the conductive material is stored and a conductive material supply pump 720 for pumping the conductive material stored in the conductive material hopper scale 710 in a fixed amount corresponding to the conductive material conveyance amount. The conductive material conveyance line connects the conductive material hopper scale 710 and the conductive material supply pump 720.

In one embodiment of the present invention, the conductive material may be made of carbon nanotubes in the form of powder or fillet.

The conductive material hopper scale 710 may accommodate all conductive materials stored in a conductive material bag transferred from the outside through a conductive material conveyance module. A solvent is supplied to the conductive material hopper scale 710 to correspond to conductive material adjusting information. The solvent transferred through the auxiliary adjusting module 660 of the solvent unit may be supplied to the conductive material hopper scale 710.

The conductive material hopper scale 710 automatically meters the amount of liquid conductive material. Compressed air or process gas may be supplied to the conductive material hopper scale 710 so that a mixed state of the liquid conductive material is stably maintained. The conductive material hopper scale 710 may allow internal gas to be smoothly discharged.

Together with the conductive material hopper scale 710, the conductive material conveyance unit 700 may further include a conductive material bulk conveyance module for supplying the liquid conductive material supplied to the mixing unit 900 to be described below to the conductive material hopper scale 710 again.

The conductive material bulk conveyance module may include a bulk conductive material 730 in which a residue of the liquid conductive material supplied to the mixing unit 900 to be described below is stored and a conductive material bulk conveyance pump 740 for supplying the conductive material of the bulk conductive material 730 to the conductive material hopper scale 710. Process gas or compressed air may be supplied to the conductive material bulk conveyance pump 740 so that the conductive material bulk conveyance pump 740 is smoothly operated.

The conductive material supply pump 720 may transfer the conductive material of the conductive material hopper scale 710 to the mixing unit 900 to be described below. Process gas or compressed air may be supplied to the conductive material supply pump 720 so that the liquid conductive material is stably conveyed.

The conductive material conveyance unit 700 may further include a first conductive material line 701 for returning the conductive material provided between the conductive material supply pump 720 and the mixing unit 900 to be described below to the conductive material hopper scale 710. The conductive material conveyance unit 700 may further include a second conductive material line 702 directly connecting the conductive material hopper scale 710 and the mixing unit 900 to be described below so that the conductive material discharged from the conductive material hopper scale 710 is directly transferred to the mixing unit 900 to be described below.

The dispersant conveyance unit 800 may convey a dispersant to be mixed with the slurry for forming the electrode in an amount corresponding to a dispersant conveyance amount.

The dispersant conveyance unit 800 may include a dispersant hopper scale 810 in which the dispersant is stored and a dispersant supply pump 820 for pumping the dispersant stored in the dispersant hopper scale 810 in a fixed amount corresponding to the dispersant conveyance amount. The dispersant conveyance line connects the dispersant hopper scale 810 and the dispersant supply pump 820.

A solvent is supplied to the dispersant hopper scale 810 to correspond to dispersant adjusting information. The solvent transferred through the auxiliary adjusting module 660 of the solvent unit may be supplied to the dispersant hopper scale 810.

The dispersant hopper scale 810 automatically meters the amount of liquid dispersant. Compressed air or process gas may be supplied to the dispersant hopper scale 810 so that a mixed state of the liquid dispersant is stably maintained. The dispersant hopper scale 810 may allow internal gas to be smoothly discharged.

Together with the dispersant hopper scale 810, the dispersant conveyance unit 800 may further include a dispersant bulk conveyance module for supplying the liquid dispersant supplied to the mixing unit 900 to be described below to the dispersant hopper scale 810 again.

The dispersant bulk conveyance module may include a bulk dispersant 830 in which a residue of the liquid dispersant supplied to the mixing unit 900 to be described below is stored and a dispersant bulk conveyance pump 840 for supplying the dispersant of the bulk dispersant 830 to the dispersant hopper scale 810. Process gas or compressed air may be supplied to the dispersant bulk conveyance pump 840 so that the dispersant bulk conveyance pump 840 is smoothly operated.

The dispersant supply pump 820 may transfer the dispersant of the dispersant hopper scale 810 to the mixing unit 900 to be described below. Process gas or compressed air may be supplied to the dispersant supply pump 820 so that the liquid conductive material is stably conveyed.

The dispersant conveyance unit 800 may further include a first dispersant line 801 for returning the dispersant provided between the dispersant supply pump 820 and the mixing unit 900 to be described below to the dispersant hopper scale 810. The dispersant conveyance unit 800 may further include a second dispersant line 802 directly connecting the dispersant hopper scale 810 and the mixing unit 900 to be described below so that the dispersant discharged from the dispersant hopper scale 810 is directly transferred to the mixing unit 900 to be described below.

The smart granular raw material conveyance system according to one embodiment of the present invention may further include the mixing unit 900.

The mixing unit 900 may mix the granular material transferred through the granular material conveyance unit 400, the solution transferred through the binder conveyance unit 500, and the solvent transferred through the slurry adjusting module 670 of the solvent conveyance unit 600. The granular material may be transferred from at least one of the first conveyance unit 100, the second conveyance unit 200, and the third conveyance unit 300. The mixing unit 900 may further mix at least one of the conductive material transferred through the conductive material conveyance unit 700 and the dispersant transferred through the dispersant conveyance unit 800.

Here, the residue of the solution is stored in the bulk binder 551, the residue of the conductive material is stored in the bulk conductive material 730, and the residue of the dispersant is stored in the bulk dispersant 830.

The mixing unit 900 may include a slurry mixing module 910 for mixing at least the granular material, the solution, and the solvent in predetermined ratios to form the slurry.

The slurry mixing module 910 may include a slurry mixer 911 in which at least a granular material, a solution, and a solvent are accommodated in preset ratios, respectively, and a slurry agitator 912 for mixing at least the granular material, the solution, and the solvent while rotating inside the slurry mixer 911 to form a liquid slurry.

Compressed air or process gas may be supplied to the slurry mixer 911 so that the formation of slurry is stabilized. A hydraulic unit 913 is provided in the slurry mixer 911 so that operations of peripheral parts are stabilized.

The slurry mixing module 910 may include a slurry vent unit 980 in which gas of the slurry mixer 911 is collected and discharged. Then, an internal pressure of the slurry mixer 911 may be adjusted and the slurry may be stabilized. The slurry vent unit 980 may include a slurry vent line 981 connecting the slurry mixer 911 and a separate storage space, a slurry filter line 982 spaced apart from the slurry vent line 981 and connecting the slurry mixer 911 and the slurry vent line 981, and a slurry vent filter 983 provided in the slurry filter line 982 and filtering gas of the slurry mixer 911.

In this case, since the slurry vent line 981 and the slurry filter line 982 are provided with slurry on-off valves, respectively, a line through which the gas of the slurry mixer 911 passes may be selected depending on whether the slurry on-off valves are opened or closed.

The mixing unit 900 may further include a slurry conveyance pump 930 for pumping the slurry of the slurry mixer 911. Process gas or compressed air may be supplied to the slurry conveyance pump 930 so that the slurry is smoothly conveyed.

The mixing unit 900 may further include at least one of a slurry magnetic filter 920 for filtering magnetic foreign substances from the slurry when the slurry is discharged from the slurry mixer 911 and a slurry mesh filter 940 for filtering non-magnetic foreign substances from the slurry when the slurry is discharged from the slurry mixer 911. In one embodiment of the present invention, the slurry magnetic filter 920 may be provided between the slurry mixer 911 and the slurry conveyance pump 930 to prevent damage to the slurry conveyance pump 930 due to magnetic foreign substances, and the slurry mesh filter 940 may filter the slurry discharged from the slurry conveyance pump 930 to prevent foreign substances from being transferred to subsequent processes.

The mixing unit 900 may facilitate attachment and detachment of the slurry mixer 911 through a maintenance module 950, and may simplify maintenance of the slurry mixer 911. The maintenance module 950 may be a crane or a chain block.

The slurry passing through the mixing unit 900 is transferred for a subsequent process to be coated on a surface of a current collector.

An unexplained reference numeral 960 denotes an electrolyte supply unit that supplies a preset amount of electrolyte to the mixing unit 900. Since the electrolyte supply unit 960 supplies the electrolyte to the slurry, ionization of the active material in the final electrode may be actively performed and performance of the electrode may be prevented from deteriorating. An unexplained reference numeral 971 denotes a vacuum chamber for sucking gas inside the slurry mixer 911 of the mixing unit 900. The gas inside the slurry mixer 911 moved to the vacuum chamber 971 is discharged separately. An unexplained reference numeral 972 denotes a vacuum pump for providing a suction force to the vacuum chamber 971. The gas sucked by the vacuum pump 972 is discharged separately.

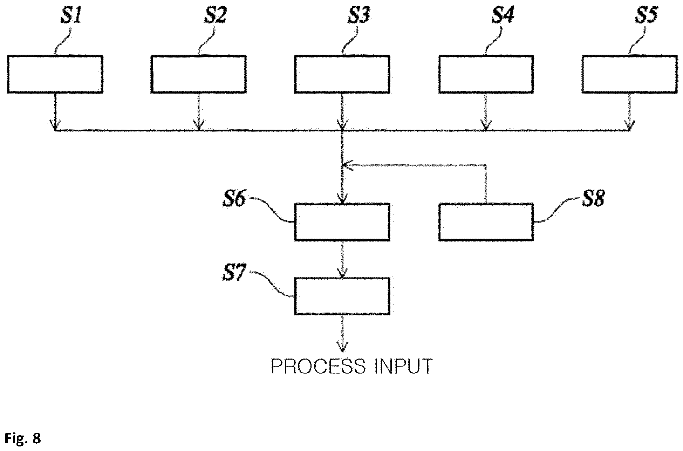

Referring to FIGS. 1 to 7, and FIG. 8, in the smart granular raw material conveyance method according to one embodiment of the present invention, when a granular material in the form of powder is conveyed along granular material conveyance lines, a precisely-metered granular material may be smoothly passed in a corresponding vertical pipe that is vertically installed in the granular material conveyance lines and the granular material may be prevented from remaining or stagnating in the vertical pipe.

The smart granular raw material conveyance method according to one embodiment of the present invention will be described as a method of conveying a granular material using the smart granular raw material conveyance system according to one embodiment of the present invention.

The smart granular raw material conveyance method according to one embodiment of the present invention may include a granular material conveyance step S 1. The granular material conveyance step S 1 may include at least one of a first conveyance step of conveying a granular material in an amount corresponding to a first conveyance amount, a second conveyance step of conveying the granular material in an amount corresponding to a second conveyance amount equal to or different from the first conveyance amount, and a third conveyance step of conveying the granular material in an amount corresponding to a third conveyance amount less than or equal to the first conveyance amount or the second conveyance amount.

The first conveyance step may include a first suction conveyance step of, when the granular material of the first conveyance unit 100 rises in the first vertical pipe 130 formed long in a height direction, passing part of the granular material of the first conveyance amount in the first vertical pipe 130 according to a suction conveyance method using a suction force acting on an upper end side of the first vertical pipe 130 and a first pressure conveyance step of, after going through the first suction conveyance step, passing a remaining granular material of the first conveyance amount in the first vertical pipe 130 according to a pressure conveyance method using a pressurizing force acting on a lower end side of the first vertical pipe 130.

A detailed configuration of the first conveyance step is replaced with the coupling relationship and operation of the first conveyance unit 100 described above.

The second conveyance step may include a second suction conveyance step of, when the granular material of the second conveyance unit 200 rises in the second vertical pipe 230 formed long in the height direction, passing part of the granular material of the second conveyance amount in the second vertical pipe 230 according to a suction conveyance method using a suction force acting on an upper end side of the second vertical pipe 230, and a second pressure conveyance step of, after going through the second suction conveyance step, passing a remaining granular material of the second conveyance amount through the second vertical pipe 230 according to a pressure conveyance method using a pressurizing force acting on a lower end side of the second vertical pipe 230.

A detailed configuration of the second conveyance step is replaced with the coupling relationship and operation of the second conveyance unit 200 described above.

The third conveyance step may include a third input step of metering and discharging the granular material stored in the third input module 310 in the third conveyance amount and a third pressure conveyance step of pressurizing the granular material discharged from the third input module 310 using process gas or compressed air so that the granular material discharged through the third input step is conveyed according to a pressure conveyance method using a pressurizing force.

A detailed configuration of the third conveyance step is replaced with the coupling relationship and operation of the third conveyance unit 300 described above.

The smart granular raw material conveyance method according to one embodiment of the present invention may further include a binder conveyance step S2 and a solvent conveyance step S3. In this case, the granular material may be made of an active material that is a raw material of the electrode.

In the binder conveyance step S2, a binder to be mixed with the active material is converted into a liquid solution in an amount corresponding to a binder conveyance amount and the converted binder is conveyed.

A detailed configuration of the binder conveyance step S2 is replaced with the coupling relationship and operation of the binder conveyance unit 500 described above.

In the solvent conveyance step S3, a solvent for forming the solution by dissolving the binder is conveyed in an amount corresponding to a solvent conveyance amount.

A detailed configuration of the solvent conveyance step S3 is replaced with the coupling relationship and operation of the solvent conveyance unit 600 described above.

The smart granular raw material conveyance method according to one embodiment of the present invention may further include at least one of a conductive material conveyance step S4 and a dispersant conveyance step S5.

In the conductive material conveyance step S4, a conductive material to be mixed with a slurry for forming the electrode is conveyed in an amount corresponding to a conductive material conveyance amount.

A detailed configuration of the conductive material conveyance step S4 is replaced with the coupling relationship and operation of the conductive material conveyance unit 700 described above.

In the dispersant conveyance step S5, a dispersant to be mixed with the slurry for forming the electrode is conveyed in an amount corresponding to a dispersant conveyance amount.

A detailed configuration of the dispersant conveyance step S5 is replaced with the coupling relationship and operation of the dispersant conveyance unit 800 described above.

The smart granular raw material conveyance method according to one embodiment of the present invention may further include a mixing step S6.

In the mixing step S6, the granular material transferred through the granular material conveyance step S 1, the solution transferred through the binder conveyance step S2, and the solvent transferred through the solvent conveyance step S3 are mixed to form the slurry for forming the electrode.

A detailed configuration of the mixing step S6 is replaced with the coupling relationship and operation of the slurry mixer 911 and the slurry agitator 912 in the mixing unit 900 described above.

The smart granular raw material conveyance method according to one embodiment of the present invention may further include a slurry conveyance step S7.

In the slurry conveyance step S7, the slurry discharged through the mixing step S6 is conveyed for a subsequent process. A detailed configuration of the slurry conveyance step S7 is replaced with the coupling relationship and operation of the slurry conveyance pump 930, the slurry magnetic filter 920, and the slurry mesh filter 940 described above.

An unexplained reference numeral S8 denotes an electrolyte supply step of supplying a preset amount of electrolyte to the mixing unit 900. As the electrolyte is supplied to the slurry, in the final electrode, ionization of the active material may be actively performed and performance of the electrode may be prevented from deteriorating.

In a process input step, the final slurry may be coated on a surface of a current collector.

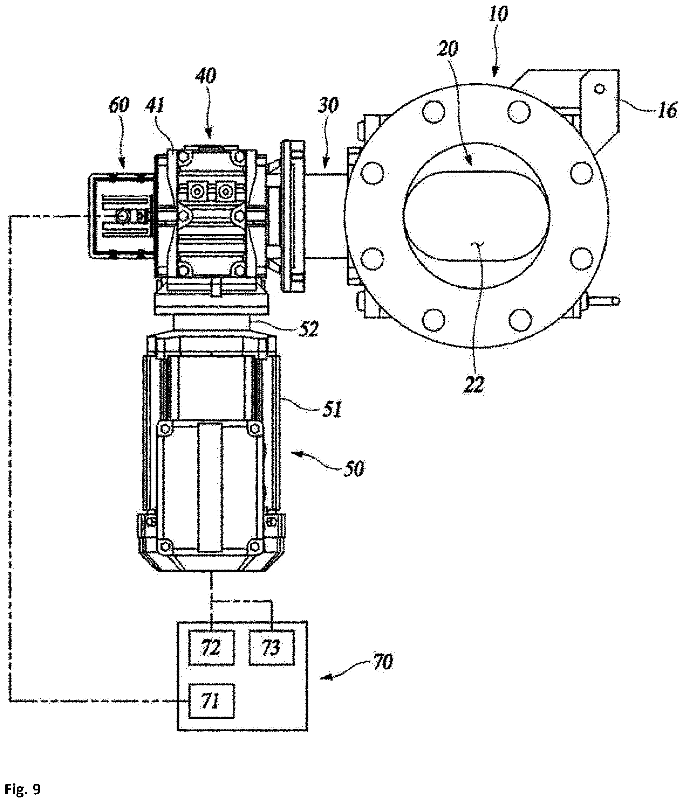

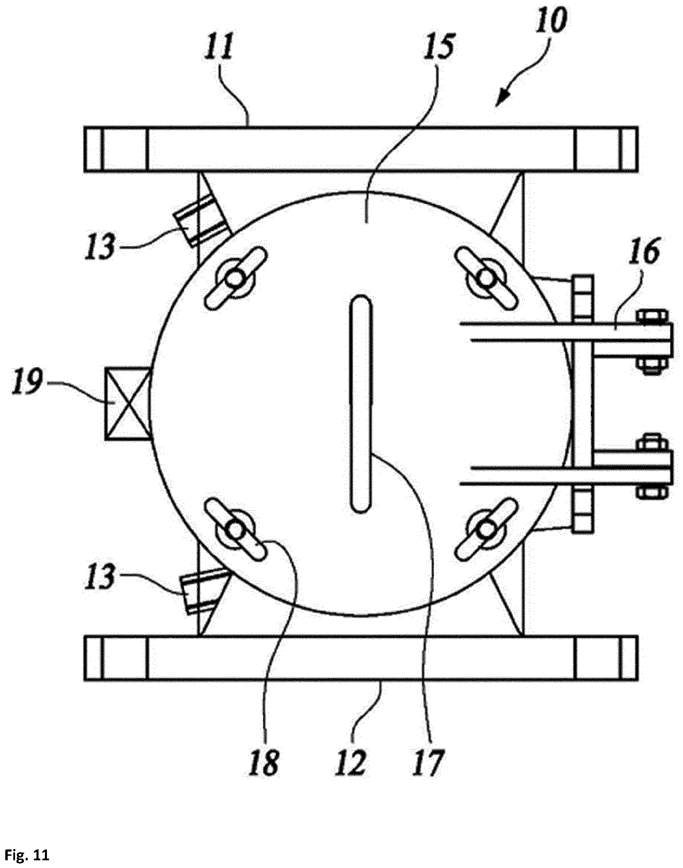

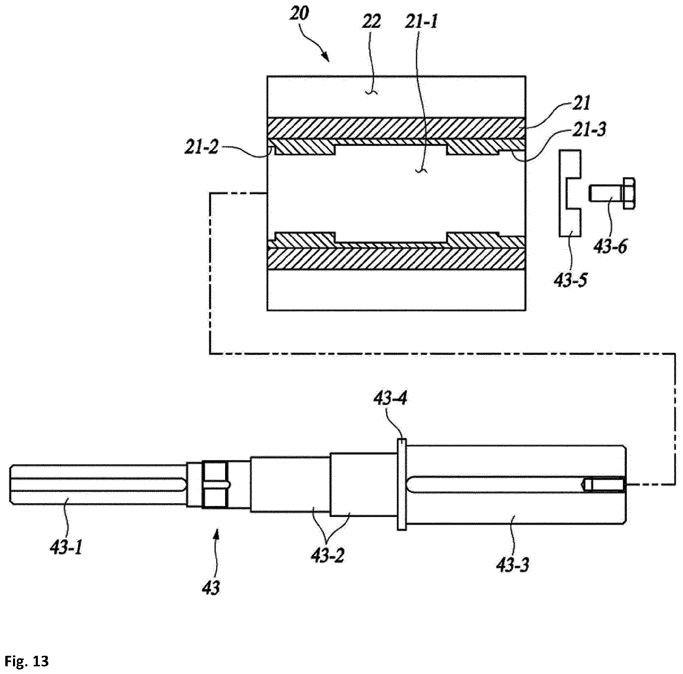

Referring to FIGS. 9 to 17, the granular material metering valve according to one embodiment of the present invention is for clearly and mechanically metering a granular material in the form of powder continuously supplied in the form of powder from the corresponding hopper in a fixed amount and sequentially discharge the metered granular material, and may include the metering housing 10 and the distribution module 20, and the granular material metering module may further include a power generation module 50. Here, the granular material metering valve according to one embodiment of the present invention may further include at least one of a rotation sensing module 60 and a speed control module 70. Here, the granular material metering valve according to one embodiment of the present invention may further include at least one of a shaft joint module 30 and a conversion module 40.

Then, the granular material introduced into an inlet 11 as the distribution module 20 rotates is separated and accommodated in a preset fixed amount for each of unit discharge grooves 22 of the distribution module 20, and then is discharged through an outlet 12 according to a first-in-first-out method.

The metering housing 10 is formed as a hollow enclosure. The inlet 11 to which the hopper is coupled is opened at an upper portion of the metering housing 10, and the outlet 12 disposed opposite to the inlet 11 is opened at a lower portion of the metering housing 10.

Here, an imaginary line may be a line connecting the inlet 11 and the outlet 12, a first virtual shaft may be a shaft perpendicular to the imaginary line, and a second virtual shaft may be a shaft perpendicular to all of the imaginary line and the first virtual shaft. However, the second virtual shaft is not limited thereto, and may be parallel with the imaginary line.

The metering housing 10 may include a distribution opening formed through one side of the metering housing 10 with respect to the second virtual shaft perpendicular to the first virtual shaft, a checking hole formed through the other side of the metering housing 10 with respect to the second virtual shaft perpendicular to the first virtual shaft, and an opening and closing member 15 for opening and closing the checking hole. The distribution opening may be opened and closed by an opening and closing j oint member 31.

At least one of the inlet 11 and the outlet 12 may be provided with purge units 13 for ventilation.

The metering housing 10 may further include at least one of an opening and closing hinge unit 16 to which the opening and closing member 15 is rotatably coupled, an opening and closing handle 17 provided on the opening and closing member 15 for gripping by a user, and an opening and closing fixing unit 18 for detachably coupling the opening and closing member 15 to the other side of the metering housing 10.

An unexplained reference numeral 19 denotes a limit switch for detecting an opening and closing state of the checking hole by the opening and closing member 15.

The distribution module 20 is built into the metering housing 10 to be rotatable with respect to the first virtual shaft perpendicular to the imaginary line connecting the inlet 11 and the outlet 12. In the distribution module 20, a plurality of unit discharge grooves 22 are arranged at equal intervals along a rotation direction. A preset fixed amount of granular material is accommodated in the unit discharge grooves 22. The distribution module 20 transfers the granular material introduced through the inlet 11 to the outlet 12.

The distribution module 20 may include a cylindrical distribution body 21 through which a distribution hole 21-1 is formed coaxially with the first virtual shaft, and a plurality of partition blades 23 formed to protrude from an outer peripheral surface of the distribution body 21 in a normal direction of the distribution body 21 so that two unit discharge grooves 22 adjacent to each other are partitioned.

Since a transmission drive shaft 43 coaxial with the first virtual shaft is caught and supported in a state of being inserted into the distribution hole 21-1 in the distribution body 21, a shaft support groove 21-2 is provided on one side, and a shaft coupling groove 21-3 is provided on the other side.

When the distribution module 20 is cut in a plane perpendicular to the first virtual shaft, a shape of the unit discharge grooves 22 is not limited, and the unit discharge grooves 22 may take various shapes, and it is preferable that the unit discharge grooves 22 are arranged at equal intervals along an outer peripheral surface of the distribution body 21.

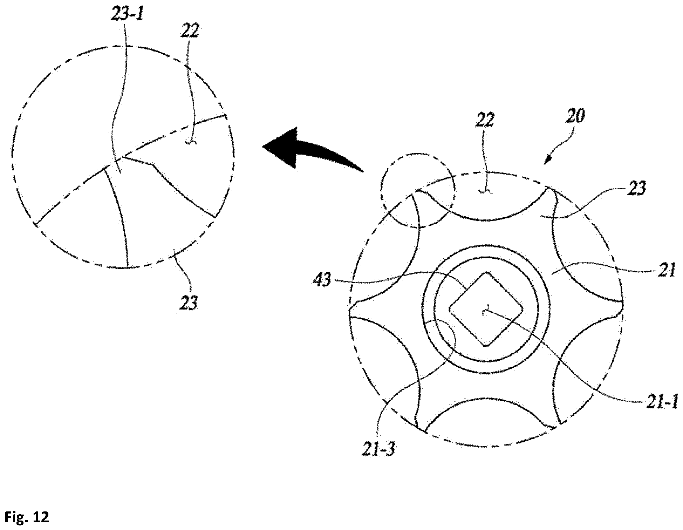

The partition blades 23 are formed to protrude from the outer peripheral surface of the distribution body 21 in a normal direction and are supported in close contact with or in contact with the inside of the metering housing 10. A scraper 23-1 supported in close contact with or in contact with an inner wall of the metering housing 10 is provided to improve adhesion. As shown in FIG. 12, the scraper 23-1 may be formed with a chamfer so that friction between the inside of the metering housing 10 and the partition blades 23 is reduced and the partition blades 23 are smoothly moved.

The shaft joint module 30 is disposed to be coaxial with the first virtual shaft. The shaft joint module 30 rotatably supports the first virtual shaft. The shaft joint module 30 is coupled to the metering housing 10 to open and close the distribution opening. The shaft joint module 30 may connect the distribution module 20 and the conversion module 40 by being coaxial with the first virtual shaft.

The shaft joint module 30 may include at least one of the opening and closing joint member 31 coupled to the metering housing 10 and rotatably supporting the first virtual shaft, and the shaft joint member 32 coupled to the conversion module 40 and rotatably supporting the first virtual shaft.

The opening and closing joint member 31 may include an opening and closing hole 31-1 formed to communicate with the distribution opening opened on one side of the metering housing 10 so that the first virtual shaft passes therethrough. Here, the opening and closing joint member 31 may further include at least one of a bushing member 31-2 for rotatably supporting the first virtual shaft in the opening and closing hole 31-1 so that the distribution opening is sealed and a retainer 31-3 for rotatably supporting the first virtual shaft in the opening and closing hole 31-1 between the bushing member 31-2 and the shaft joint member 32 so that the first virtual shaft and the center of the opening and closing hole 31-1 are coaxial.

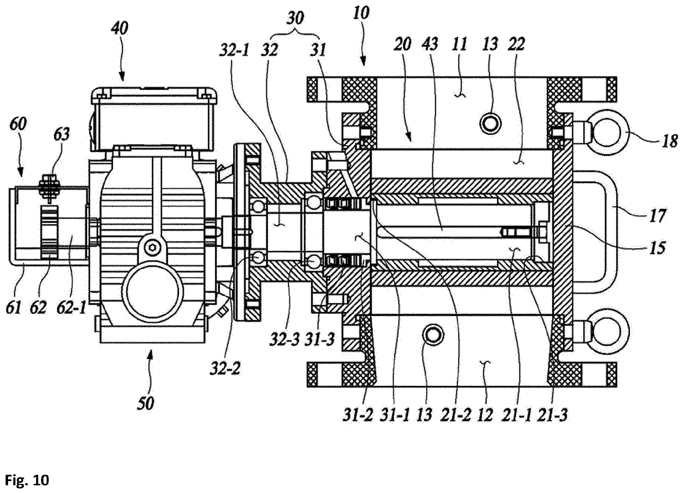

The shaft joint member 32 may include a shaft joint hole 32-1 through which a first virtual shaft passes, and a bearing member for rotatably supporting the first virtual shaft in the shaft joint hole 32-1. Referring to FIG. 10, the bearing member is described as including a first bearing 32-2 provided on one side of the shaft joint hole 32-1 and a second bearing 32-3 provided on the other side of the shaft joint hole 32-1, but the bearing member is not limited thereto, and the number of bearing members may be adjusted.

The conversion module 40 is disposed to be coaxial or parallel with the first virtual shaft. The conversion module 40 converts a rotational force for rotating the distribution module 20 and transmits the converted force to the distribution module 20. In one embodiment of the present invention, the conversion module 40 is shown as being coupled to the shaft joint module 30 coaxially with the first virtual shaft. However, the conversion module 40 is not limited thereto, and when the shaft joint module 30 is omitted, the conversion module 40 may be coupled to one side of the metering housing 10.

The conversion module 40 may include a conversion body 41 disposed on one side of the metering housing 10 and coupled to the shaft joint module 30 or the metering housing 10, the transmission drive shaft 43 that is coaxial with the first virtual shaft and rotatably coupled to the conversion body 41, and a drive connection shaft that is coaxial or parallel with the second virtual shaft perpendicular to the first virtual shaft and rotatably coupled to the conversion body 41 in a state of being engaged with the transmission drive shaft 43. In this case, the transmission drive shaft 43 is detachably coupled to the distribution module 20 to rotate together with the distribution module 20.

The transmission drive shaft 43 may include a conversion connection unit 431 rotatably coupled to the conversion body 41 and a distribution joint connection unit 43-3 extending coaxially with the conversion connection unit 43-1 to be inserted and supported in the distribution hole 21-1 provided in the distribution module 20.

The transmission drive shaft 43 may further include a shaft joint connection unit 43-2 coaxially connecting the conversion connection unit 43-1 and the distribution joint connection unit 43-3 to be rotatably inserted and supported in the shaft joint module 30. The shaft joint connection unit 43-2 is rotatably supported by the shaft joint module 30.

The transmission drive shaft 43 may further include a support protrusion 43-4 formed on one side of the distribution joint connection unit 433 and caught and supported on one side of the distribution module 20 and a shaft fixing member detachably coupled to the other side of the distribution joint connection unit 43-3 and caught and supported on the other side of the distribution module 20.

Then, the support protrusion 43-4 is caught and supported by the shaft support groove 21-2, and the shaft fixing member is caught and supported by the shaft coupling groove 21-3.

The shaft fixing member may include a fixing bracket 43-5 caught and supported by the shaft coupling groove 21-3 on the other side of the distribution module 20 to face an end of the transmission drive shaft 43 and a fixing coupling unit 43-6 for detachably coupling the fixing bracket 43-5 to an end of the transmission drive shaft 43. In one embodiment of the present invention, the fixing coupling unit 43-6 is shown as being screw-coupled to the transmission drive shaft 43 through the fixing bracket 435.

The power generation module 50 is disposed to be coaxial or parallel with, or intersect the first virtual shaft. The power generation module 50 generates a rotational force for rotating the distribution module 20 by applied electric power. In one embodiment of the present invention, the power generation module 50 is shown as being coupled to the conversion module 40 coaxially or parallel with the second virtual shaft perpendicular to the first virtual shaft.

The power generation module 50 may include a power generation unit 51 for generating a rotational force by the applied electric power and a power shaft rotated by a rotational force at the center of the power generation unit 51 and coaxially connected to the drive connection shaft of the conversion module 40.

The power generation module 50 may further include a power shaft joint 52 for connecting the power shaft to the drive connection shaft.

The rotation sensing module 60 is disposed to be coaxial with the first virtual shaft. The rotation sensing module 60 detects a position of the unit discharge groove 22 in the metering housing 10. In one embodiment of the present invention, the rotation sensing module 60 is shown as being coupled to the conversion module 40 coaxially with the first virtual shaft. However, when the conversion module 40 is omitted, the rotation sensing module 60 may be coupled to the shaft joint module 30 or the metering housing 10.

In a granular material metering method using a rotary valve in the related art, due to the structural characteristics of a machine, there is a problem in that a stopping position of the unit discharge groove 22 is not accurately identified when an operation is stopped, and closing of the outlet 12 of the metering housing 10 is incorrect when a set metering value is reached, causing significant fluctuations in a discharge amount.

However, according to the coupling relationship between the distribution module 20 and the rotation sensing module 60 and the detailed coupling state of the rotation sensing module 60 according to one embodiment of the present invention, the above problem may be solved, and in an operation stop state, the communication between the inlet 11 and the unit discharge groove 22 and the communication between the outlet 12 and the unit discharge groove 22 may be clarified, thereby stabilizing the stopping position of the unit discharge groove 22 and making it easy to close the outlet 12 by the distribution module 20.

In addition, in the distribution module 20 according to one embodiment of the present invention, the inlet 11 and the unit discharge groove 22 communicate and the outlet 12 and the unit discharge groove 22 communicate, and correspondingly, at least one of the unit discharge grooves 22 disposed on both sides of the unit discharge groove 22 communicating with the outlet 12 does not communicate with the outlet 12, so that the closing and sealing of the outlet 12 may be stably maintained, and an error in a granular material accommodation capacity may be minimized in a unit accommodation space of the granular material determined by a space between a pair of adjacent sensing blades 62-3 and the unit discharge groove 22.

The rotation sensing module 60 may include a sensing paddle 62 that is rotatably coupled to the conversion module 40, the shaft joint module 30, or the metering housing 10 via a paddle shaft 62-1 coaxial with a first virtual shaft and is rotatable with the first virtual shaft, and a speed sensor 63 for detecting the sensing paddle 62.

Here, the sensing paddle 62 may include a paddle body 62-2 coupled to the paddle shaft 62-1 and sensing blades 62-3 arranged at equal intervals on the paddle body 62-2 along an outer peripheral surface of the paddle body 62-2 to correspond to the unit discharge grooves 22. Then, the speed sensor 63 may detect the rotation amount of the distribution module by detecting the sensing blades 62-3.

In the sensing paddle 62, one of the paddle body 62-2 or the sensing blade 62-3 may be provided with a default setting unit 62-4 so that the unit discharge groove 22 is maintained in a stably open state at the inlet 11 of the metering housing 10 and initialization of the distribution module 20 is promoted.

The rotation sensing module 60 may further include a sensing body 61 coupled to the conversion module 40, the shaft joint module 30, or the metering housing 10 so that part or all of the sensing paddle 62 and the speed sensor are built in.

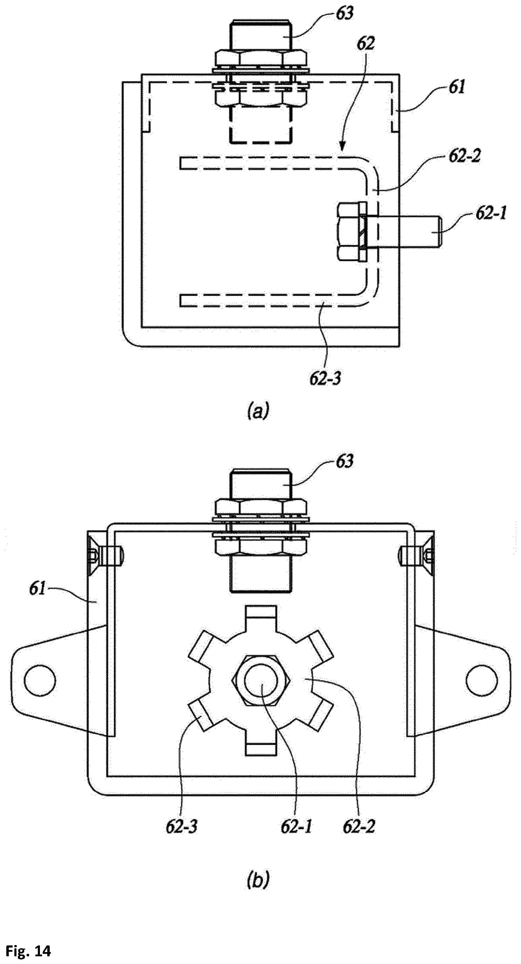

Referring to a first coupled state, as shown in FIG. 14, the sensing blade 62-3 may be formed by bending from an edge of the paddle body 62-2. Further, the speed sensor 63 is spaced apart from the outside of a virtual cylinder connecting the sensing blades 62-3 and coupled to the sensing body 61. Then, since the speed sensor 63 is spaced apart from the paddle body 62-2 and is disposed to look only at the sensing blades 62-3, the speed sensor 63 may intermittently detect the sensing blades 62-3 according to the rotation of the paddle shaft 62-1. Since the width of the sensing blade 62-3 corresponding to a rotation direction of the paddle shaft 62-1 forms a preset first sensing width, the position of the unit discharge groove 22 is clearly identified with respect to the inlet 11 or the outlet 12, and a preset fixed amount of granular material is stably accommodated in the unit discharge groove 22 when the rotational force of the distribution module 20 is adjusted by the speed control module 70.

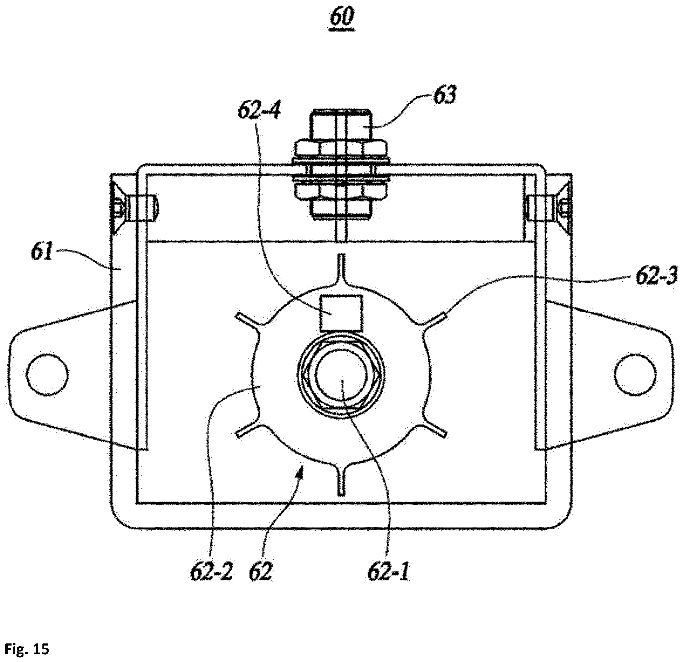

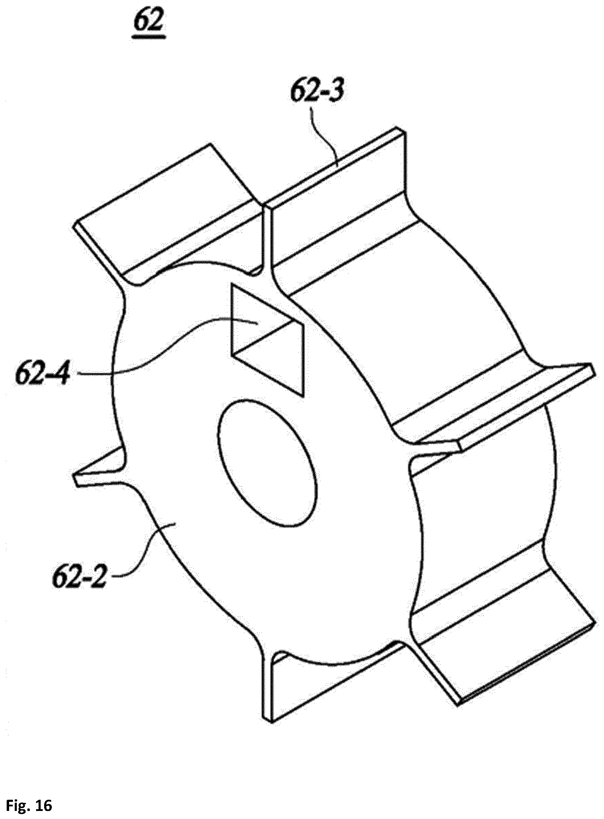

Referring to a second coupled state, as shown in FIGS. 15 and 16, the sensing blade 62-3 may be formed to protrude from a peripheral surface of the paddle body 62-2 in a normal direction. Further, the speed sensor 63 is spaced apart from the outside of the virtual cylinder connecting the sensing blades 62-3 and coupled to the sensing body 61. Then, since the speed sensor 63 is disposed to look at both the peripheral surface of the paddle body 62-2 and the sensing blades 62-3, the speed sensor 63 may intermittently detect the sensing blades 62-3 according to the rotation of the paddle shaft 62-1. Since the width of the sensing blade 62-3 corresponding to a rotation direction of the paddle shaft 62-1 forms a second sensing width smaller than the preset first sensing width, the position of the unit discharge groove 22 is clearly identified with respect to the inlet 11 or the outlet 12, and a preset fixed amount of granular material is stably accommodated in the unit discharge groove 22 when the rotational force of the distribution module 20 is adjusted by the speed control module 70.

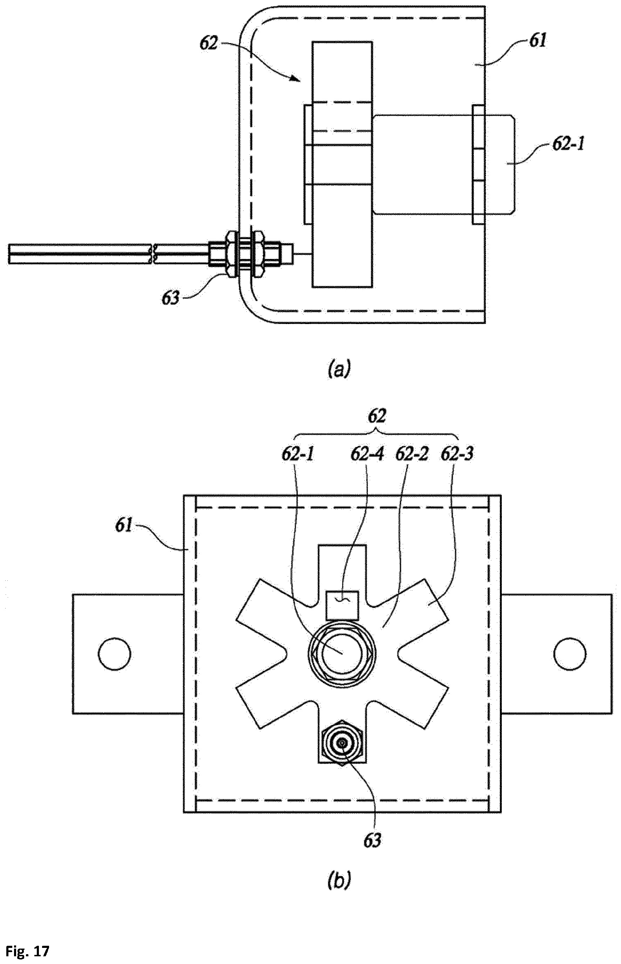

Referring to a third coupled state, as shown in FIG. 17, the sensing blade 62-3 may be formed to protrude from the peripheral surface of the paddle body 62-2 in a normal direction. Further, the speed sensor 63 is coupled to the sensing body 61 to face a side of the paddle body 62-2. Then, since the speed sensor 63 is disposed to look only at the sensing blades 62-3 in a direction parallel with the paddle shaft 62-1, the speed sensor 63 may intermittently detect the sensing blades 62-3 according to the rotation of the paddle shaft 62-1. Since the width of the sensing blade 62-3 corresponding to a rotation direction of the paddle shaft 62-1 forms the preset first sensing width, the position of the unit discharge groove 22 is clearly identified with respect to the inlet 11 or the outlet 12, and a preset fixed amount of granular material is stably accommodated in the unit discharge groove 22 when the rotational force of the distribution module 20 is adjusted by the speed control module 70.

Referring to a detailed coupling relationship of the rotation sensing module 60, using the width of the sensing blade 62-3 corresponding to the rotation direction of the paddle shaft 62-1 and a gap between two adjacent sensing blades 62-3, a time at which the speed sensor 63 detects the sensing blade 62-3, a time at which the rotational force generated from the power generation module 50 is adjusted, and the like, may be adjusted, and the granular material accommodated in the unit distribution groove 22 may be clearly adjusted.

The speed control module 70 adjusts the rotational force generated by the power generation module 50 according to the position of the unit discharge groove 22 of the distribution module 20 detected by the rotation sensing module 60. The adjusting method of the rotational force in the speed control module 70 may be divided into a fine deceleration method and an acceptable acceleration method. Then, the position of the unit discharge groove may be detected through the rotation sensing module 60, a metering value of the granular material accumulated in the unit discharge groove 22 may be calculated under the control of the speed control module 70, and an error value due to precise metering may be minimized and applied by converting the weight of the granular material per unit discharge groove 22.

According to the fine deceleration method, the speed control module 70 may include a detection check unit 71 for checking whether a detection signal is generated with respect to the rotation amount of the distribution module 20, an acceptance control unit 72 for maintaining the rotational force generated by the power generation module 50 when the detection signal is not generated as a result of the checking of the detection check unit 71, and an adjustment control unit 73 for reducing the rotational force generated from the power generation module 50 to a preset deceleration force when the detection signal is generated as the result of the checking of the detection check unit 71.

According to the acceptable acceleration method, the speed control module 70 may include a detection check unit 71 for checking whether a detection signal is generated with respect to the rotation amount of the distribution module 20, an acceptance control unit 72 for maintaining the rotational force generated by the power generation module 50 when the detection signal is generated as a result of the checking of the detection check unit 71, and an adjustment control unit 73 for increasing the rotational force generated from the power generation module 50 to a preset acceleration force when the detection signal is generated as the result of the checking of the detection check unit 71.

As one example, while the speed sensor 63 detects the sensing blades 62-3 of the sensing paddle 62, since the speed control module 70 relatively reduces the rotational force of the power generation module 50 and causes the distribution module 20 to rotate relatively slowly, a communication time of the unit discharge groove 22 at the inlet 11 may be relatively long, and 85% to 90% of the unit discharge groove 22 at the inlet 11 may be maintained in a communication state, and thus the granular material may be sufficiently supplied to the unit discharge groove 22. In addition, when the speed sensor 63 does not detect the sensing blades 62-3 of the sensing paddle 62, since the speed control module 70 relatively increases the rotational force of the power generation module 50 and causes the distribution module 20 to rotate relatively quickly, the communication time of the unit discharge groove 22 at the inlet 11 may be relatively short, and only a portion of the granular material transferred from the hopper (10% to 15% of the granular material accommodated per unit discharge groove 22) may be supplied to the unit discharge groove 22.

As another example, while the speed sensor 63 detects the sensing blades 62-3 of the sensing paddle 62, since the speed control module 70 relatively reduces the rotational force of the power generation module 50 and causes the distribution module 20 to rotate relatively slowly, the granular material may be transferred to each of two adjacent unit discharge grooves 22. In addition, when the speed sensor 63 does not detect the sensing blades 62-3 of the sensing paddle 62, since the speed control module 70 relatively increases the rotational force of the power generation module 50 and causes the distribution module 20 to rotate relatively quickly, the communication time of the unit discharge groove 22 at the inlet 11 may be relatively short, and one of the two adjacent unit discharge grooves 22 may be quickly moved to the outlet 12, and the other one of the two adjacent unit discharge grooves 22 may have an increased communication area with the inlet 11, but only a portion of the granular material transferred from the hopper (10% to 15% of the granular material accommodated per unit discharge groove 22) may be supplied to the unit discharge groove 22.

According to the above-described smart granular raw material conveyance system and smart granular raw material conveyance method, when the granular material in the form of powder is conveyed along granular material conveyance lines, a precisely-metered granular material may be smoothly passed in the corresponding vertical pipe that is vertically installed in the granular material conveyance lines and the granular material may be prevented from remaining or stagnating in the vertical pipe.

In addition, since pressure conveying of the granular material is performed after suction conveying of the granular material in the first granular material line of the granular material conveyance lines, a load acting on the first vertical pipe 130 may be minimized, the thickness of the first vertical pipe 130 may be reduced, and a cost reduction effect may be expected through maintenance cost and material cost reduction.

In addition, through a detailed configuration of the first conveyance unit 100, the granular material may be smoothly conveyed between the first input module 110 and the first metering module 140, and suction conveying of the granular material and pressure conveying of the granular material may be clearly performed in the first granular material line of the granular material conveyance lines.

In addition, through a detailed configuration of the first metering module 140, a suction force for suction conveying of the granular material may be stably generated in the first granular material line of the granular material conveyance lines, and the granular material may be smoothly conveyed between the first vertical pipe 130 and the first metering hopper 141 in the integrated first metering module 140.

In addition, through a detailed configuration of the first vacuum ejector 143, a stable suction force may be provided to the granular material, continuous conveyance of the granular material may be clarified by being performed int the amount corresponding to the first conveyance amount, and clogging of the first granular material line or the first vertical pipe 130 may be resolved by preventing the granular material from remaining or stagnating in the first vertical pipe 130.

In addition, through a detailed configuration of the first input module 110, transfer of the granular material transferred from the outside may be facilitated, and the purity of the granular material may be improved by removing foreign substances mixed with the granular material.

In addition, since pressure conveying of the granular material is performed after suction conveying of the granular material in a second granular material line of the granular material conveyance lines, a load acting on the second vertical pipe 230 may be minimized, the thickness of the second vertical pipe 230 may be reduced, and a cost reduction effect may be expected through maintenance cost and material cost reduction.

In addition, through a detailed configuration of the second conveyance unit 200, the granular material may be smoothly conveyed between the second input module 210 and the second metering module 240, and suction conveying of the granular material and pressure conveying of the granular material may be clearly performed in the second granular material line of the granular material conveyance lines.

In addition, through a detailed configuration of the second metering module 240, a suction force for suction conveying of the granular material may be stably generated in the second granular material line of the granular material conveyance lines, and the granular material may be smoothly conveyed between the second vertical pipe 230 and the second metering hopper 241 in the integrated second metering module 240.

In addition, through a detailed configuration of the second vacuum ejector 243, a stable suction force may be provided to the granular material, continuous conveyance of the granular material may be clarified by being performed in the amount corresponding to the second conveyance amount, and clogging of the second granular material line or the second vertical pipe 230 may be resolved by preventing the granular material from remaining or stagnating in the second vertical pipe 230.

In addition, through a detailed configuration of the second conveyance unit 200, the granular material may be smoothly conveyed between the second input module 210 and the silo module 260, and suction conveying of the granular material and pressure conveying of the granular material may be clearly performed in the second granular material line of the granular material conveyance lines.

In addition, through a detailed configuration of the silo module 260, a suction force for suction conveying of the granular material may be stably generated in the second granular material line of the granular material conveyance lines, and the granular material may be smoothly conveyed between the second vertical pipe 230 and the granular material silo 261 in the integrated silo module 260.

In addition, through a detailed configuration of the silo vacuum ejector 262, a stable suction force may be provided to the granular material, continuous conveyance of the granular material may be clarified by being performed in the amount corresponding to the second conveyance amount, and clogging of the second granular material line or the second vertical pipe 230 may be resolved by preventing the granular material from remaining or stagnating in the second vertical pipe 230.

In addition, through a detailed configuration of the second conveyance unit 200, the granular material may be smoothly conveyed between the silo module 260 and the second metering module 240, and suction conveying of the granular material and pressure conveying of the granular material may be clearly performed in the second granular material line of the granular material conveyance lines.

In addition, a large amount of granular material transferred from the outside through the silo module 260 may be stored and then intermittently discharged.

In addition, through a detailed configuration of the second input module 210, transfer of the granular material transferred from the outside may be facilitated, and the purity of the granular material may be improved by removing foreign substances mixed with the granular material.

In addition, through a detailed configuration of the third conveyance unit 300, the amount of granular material may be adjusted and additionally input depending on the state of the final slurry in the mixing unit 900, which is the final destination of the granular material.

In addition, through an additional configuration of the binder conveyance unit 500 and the solvent conveyance unit 600, the slurry for forming the electrode may be stably prepared using the granular material made of an active material.

In addition, through a detailed configuration of the binder conveyance unit 500, the binder in the form of powder or fillet may be stably dissolved, and the concentration of the solution formed by dissolution of the binder may be easily adjusted.

In addition, through a detailed configuration of the solvent conveyance unit 600, a fixed amount of solvent may be stably supplied to a required unit.

In addition, through an additional configuration of the conductive material conveyance unit 700, a fixed amount of conductive material may be stably supplied to the final slurry, and the electrical conductivity of the slurry may be improved.

In addition, through a detailed configuration of the conductive material conveyance unit 700, liquefaction of the conductive material is promoted, and thus the conductive material is smoothly conveyed and a safe homogeneous mixture of the conductive material and the active material is formed.

In addition, through an additional configuration of the dispersant conveyance unit 800, the granular material as an active material may be smoothly dispersed, and the marketability of the final slurry may be improved.

In addition, through a detailed configuration of the dispersant conveyance unit 800, liquefaction of the conductive material is promoted, and thus the dispersant is smoothly conveyed, the active material is smoothly pre-dispersed through the dispersant, and the dispersant and the active material form a stable, homogeneous mixture.

In addition, through an additional configuration of the mixing unit 900, the final slurry for forming the electrode may be stabilized.

In addition, through a detailed configuration of the mixing unit 900, the slurry may be formed as a stable homogeneous mixture, and the concentration of the slurry may be easily adjusted.

In addition, through detailed configurations of the smart granular raw material conveyance method, the coupling relationship of the smart granular raw material conveyance system may be clarified, the smart granular raw material conveyance system may be stably implemented, and effects of the above-mentioned units may be clearly expressed.

According to the granular material metering valve, the granular material in the form of powder may be mechanically clearly metered in a fixed amount and discharged sequentially.

In addition, through the metering housing 10, the distribution module 20 is rotatably supported, and unit discharge grooves 22 are formed inside so that a preset fixed amount of granular material is separated and accommodated.

In addition, through a detailed configuration of the metering housing 10, at least one of the distribution opening and the checking hole may be opened and closed, attachment and detachment of the distribution module 20 from the metering housing 10 may be simplified, and maintenance of the distribution module 20 in the metering housing 10 may be stabilized.

In addition, through a configuration of the purge unit 13, dust explosion is prevented at at least one of the inlet 11 and the outlet 12, the granular material is more smoothly conveyed, the granular material is supplied to the distribution module 20 in a fixed amount, and the granular material is discharged from the distribution module 20 in fixed amount.

In addition, through the distribution module 20, the unit discharge grooves 22 capable of accommodating a preset fixed amount of granular material may be formed inside the metering housing 10, and thus the granular material may be smoothly conveyed.

In addition, through a detailed configuration of the distribution module 20, partitioning into the unit discharge grooves 22 may be stably achieved, and thus the granular material in the unit discharge grooves 22 may be clearly conveyed.

In addition, through the scraper 23-1, the granular material may be prevented from sticking inside the metering housing 10, and the granular material may be prevented from being transferred between the unit discharge grooves 22.

In addition, through the shaft joint module 30, at least one of the distribution opening and the checking hole may be opened and closed, attachment and detachment of the distribution module 20 from the metering housing 10 may be simplified, and maintenance of the distribution module 20 in the metering housing 10 may be stabilized.

In addition, through the opening and closing joint member 31, the granular material inside the metering housing 10 may be prevented from leaking to the outside, rotation of the distribution module 20 may be clearly made, and flow due to the rotation of the distribution module 20 may be prevented.

In addition, through the shaft joint member 32, the transmission drive shaft 43, which is the first virtual shaft, may be stably supported, and rotation of the transmission drive shaft 43 may be smoothly made.

In addition, by adjusting a rotational force through the conversion module 40, the distribution module 20 may be stably rotated with a uniform rotational force.

In addition, through a detailed configuration of the conversion module 40, a transmission direction of the rotational force may be easily changed.

In addition, through a coupling relationship of the transmission drive shaft 43, the distribution module 20, the shaft joint module 30, and the conversion module 40 may be disposed on the same axis so that the rotation of the transmission drive shaft 43 is smoothly made, a coupling force of the transmission drive shaft 43 in the distribution module 20 may be improved so that the distribution module 20 is stably fixed to the transmission drive shaft 43, and the transmission drive shaft 43 smoothly rotates in the shaft joint module 30.

In addition, through the power generation module 50, a stable rotational force may be generated, and transmission of the rotational force to the conversion module 40 may be clearly made.

In addition, through the rotation sensing module 60, the rotation amount of the distribution module 20 may be easily checked with respect to the unit discharge groove 22, and the position of the unit discharge groove 22 may be easily and clearly identified based on the inlet 11 and the outlet 12.

In addition, through a detailed configuration of the rotation sensing module 60, position detection necessary for adjusting a rotation speed of the distribution module 20 is clearly made and a communication relationship between the inlet 11, the unit discharge groove 22, and the outlet 12 is adjusted so that the granular material is stably conveyed.

In addition, through a detailed configuration of the sensing paddle 62, a sensing position may be stably specified to correspond to a rotational width of the unit discharge groove 22, and the sensitivity of the speed sensor 63 may be improved so that the rotational force is clearly adjusted.

In addition, through the default setting unit 62-4, the unit discharge groove 22 may be initially disposed at a right position corresponding to the inlet 11, and the granular material metering valve may be easily initialized.

In addition, through the speed control module 70, the transferred amount of the granular material transferred to the distribution module 20 is clearly adjusted and a preset fixed amount of granular material is injected into each unit distribution groove.

In addition, since a deceleration force smaller than a reference rotational force is provided through the fine deceleration method, energy waste in the power generation module 50 may be prevented, and rotational force control may be smoothly performed.

In addition, since an acceleration force greater than the reference rotational force is provided through the acceptable acceleration method, control according to the rotation of the distribution module 20 may be easily performed and rotational force control may be smoothly performed.

As described above, the preferred embodiments of the present invention have been described with reference to the drawings, but one ordinary skilled in the art can make various changes or modifications to the present invention without departing from the spirit and scope of the present invention as hereinafter claimed.

### [Industrial Applicability]

With a smart granular raw material conveyance system and a smart granular raw material conveyance method according to the present invention, when a granular material in the form of powder is conveyed along granular material conveyance lines, a precisely-metered granular material can be smoothly passed in a corresponding vertical pipe that is vertically installed in the granular material conveyance lines and the granular material can be prevented from remaining or stagnating in the vertical pipe.

## Claims

1. A smart granular raw material conveyance system comprising:
a granular material conveyance unit including at least one of a first conveyance unit configured to convey a granular material in an amount corresponding to a first conveyance amount, a second conveyance unit spaced apart from the first conveyance unit and configured to convey the granular material in an amount corresponding to a second conveyance amount equal to or different from the first conveyance amount, and a third conveyance unit spaced apart from the first conveyance unit and the second conveyance unit and configured to convey the granular material in an amount corresponding to a third conveyance amount equal to or less than the first conveyance amount or the second conveyance amount,
wherein the first conveyance unit includes a granular material metering valve configured to meter the granular material in a predetermined fixed amount corresponding to the first conveyance amount,
the granular material metering valve includes:
a hollow metering housing having an open inlet to which a hopper is coupled and an open outlet disposed to be opposed to the inlet; and
a distribution module built into the metering housing to be rotatable with respect to a first virtual shaft perpendicular to a virtual line connecting the inlet and the outlet and having a plurality of unit discharge grooves arranged at equal intervals along a rotation direction,
the granular material introduced into the inlet by rotation of the distribution module is separated and accommodated in a predetermined fixed amount for each unit discharge groove and then discharged through the outlet according to a first-in-first-out method,
when the granular material of the first conveyance unit rises in a first vertical pipe formed long in a height direction, part of the granular material of the first conveyance amount passes through the first vertical pipe according to a suction conveyance method using a suction force acting on an upper end side of the first vertical pipe, and
next, a remaining granular material of the first conveyance amount passes through the first vertical pipe according to a pressure conveyance method using a pressurizing force acting on a lower end side of the first vertical pipe.

2. The smart granular raw material conveyance system of claim 1, wherein the first conveyance unit includes:
a first input module configured to store the granular material and meter and discharge the granular material in the first conveyance amount;
a 1-1 pressure conveyance module configured to pressurize the granular material discharged from the first input module using process gas or compressed air so that the granular material discharged from the first input module is conveyed according to the pressure conveyance method using a pressurizing force;
the first vertical pipe formed long in the height direction to form a path through which the granular material discharged from the first input module rises;
a first metering module configured to suck and store the granular material discharged from the first input module or the granular material of the first vertical pipe using process gas or compressed air so that the granular material discharged from the first input module is conveyed according to the suction conveyance method using a suction force and meter and discharge the granular material in a first metered amount using a rotary valve method; and
a 1-2 pressure conveyance module configured to pressurize the granular material discharged from the first metering module using process gas or compressed air so that the granular material discharged from the first metering module is conveyed according to the pressure conveyance method using a pressurizing force,
at least one of the first input module and the first metering module includes the granular material metering valve,
based on the first vertical pipe, the 1-1 pressure conveyance module is connected to the lower end side of the first vertical pipe, and the first input module is connected to the 1-1 pressure conveyance module, and
based on the first vertical pipe, the first metering module is connected to the upper end side of the first vertical pipe, and the 1-2 pressure conveyance module is connected to the first metering module.

3. The smart granular raw material conveyance system of claim 2, wherein the first metering module includes:
a first metering hopper in which the granular material conveyed through the first vertical pipe is stored;
a first vacuum ejector configured to suck the granular material discharged from the first input module according to the suction conveyance method using a suction force and transfer the granular material to the first metering hopper; and
a first metering valve configured to meter and discharge the granular material stored in the first metering hopper in the first metered amount using the rotary valve method, and
the first metering valve includes the granular material metering valve.

4. The smart granular raw material conveyance system of claim 3, wherein the first vacuum ejector includes:
a vacuum tank unit having an inside maintained in a vacuum state by process gas or compressed air;
a vacuum head unit configured to generate the suction force as the process gas or the compressed air is input to maintain the inside of the vacuum tank unit in the vacuum state;
a granular material input unit to which the first vertical pipe is connected so that the first vertical pipe communicates with the vacuum tank unit;
a connection valve unit configured to communicate between the vacuum tank unit and the first metering hopper in an openable and closable manner; and
a control unit configured to control an operating relationship between the first input module, the 1-1 pressure conveyance module, and the vacuum head unit, and
the control unit is configured to:
operate the vacuum head unit in a state where the 1-1 pressure conveyance module is stopped so that part of the granular material passes through the first vertical pipe according to the suction conveyance method by a suction force as the granular material is discharged from the first input module; and
next, stop the vacuum head unit and simultaneously operate the 1-1 pressure conveyance module so that the rest of the granular material passes through the first vertical pipe according to the pressure conveyance method by a pressurizing force.

5. The smart granular raw material conveyance system of claim 2, wherein the first input module includes:
a first input hopper in which the granular material is stored;
a first magnetic filter configured to filter magnetic foreign substances from the granular material when the granular material is put into the first input hopper;
a first mesh filter configured to filter non-magnetic foreign substances from the granular material when the granular material is put into the first input hopper; and
a first input valve configured to meter and discharge the granular material stored in the first input hopper in the first conveyance amount using the rotary valve method, and
the first input valve includes the granular material metering valve.

6. A smart granular raw material conveyance system comprising:
a granular material conveyance unit including at least one of a first conveyance unit configured to convey a granular material in an amount corresponding to a first conveyance amount, a second conveyance unit spaced apart from the first conveyance unit and configured to convey the granular material in an amount corresponding to a second conveyance amount equal to or different from the first conveyance amount, and a third conveyance unit spaced apart from the first conveyance unit and the second conveyance unit and configured to convey the granular material in an amount corresponding to a third conveyance amount equal to or less than the first conveyance amount or the second conveyance amount,
wherein the second conveyance unit includes a granular material metering valve configured to meter the granular material in a predetermined fixed amount corresponding to the second conveyance amount,
the granular material metering valve includes:
a hollow metering housing having an open inlet to which a hopper is coupled and an open outlet disposed to be opposed to the inlet; and
a distribution module built into the metering housing to be rotatable with respect to a first virtual shaft perpendicular to a virtual line connecting the inlet and the outlet and having a plurality of unit discharge grooves arranged at equal intervals along a rotation direction,
the granular material introduced into the inlet by rotation of the distribution module is separated and accommodated in a predetermined fixed amount for each unit discharge groove and then discharged through the outlet according to a first-in-first-out method,
when the granular material of the second conveyance unit rises in a second vertical pipe formed long in a height direction, part of the granular material of the second conveyance amount passes through the second vertical pipe according to a suction conveyance method using a suction force acting on an upper end side of the second vertical pipe, and
next, a remaining granular material of the second conveyance amount passes through the second vertical pipe according to a pressure conveyance method using a pressurizing force acting on a lower end side of the second vertical pipe.

7. The smart granular raw material conveyance system of claim 6, wherein the second conveyance unit includes:
a second input module configured to store the granular material and meter and discharge the granular material in the second conveyance amount;
a 2-1 pressure conveyance module configured to pressurize the granular material discharged from the second input module using process gas or compressed air so that the granular material discharged from the second input module is conveyed according to the pressure conveyance method using a pressurizing force;
a second vertical pipe formed long in the height direction to form a path through which the granular material discharged from the second input module rises;
a second metering module configured to suck and store the granular material discharged from the second input module or the granular material of the second vertical pipe using process gas or compressed air so that the granular material discharged from the second input module is conveyed according to the suction conveyance method using a suction force, and meter and discharge the granular material in a second metered amount using a rotary valve method; and
a 2-2 pressure conveyance module configured to pressurize the granular material discharged from the second metering module using process gas or compressed air so that the granular material discharged from the second metering module is conveyed according to the pressure conveyance method using a pressurizing force,
at least one of the second input module and the second metering module includes the granular material metering valve,
based on the second vertical pipe, the 2-1 pressure conveyance module is connected to the lower end side of the second vertical pipe, and the second input module is connected to the 2-1 pressure conveyance module, and
based on the second vertical pipe, the second metering module is connected to the upper end side of the second vertical pipe, and the 2-2 pressure conveyance module is connected to the second metering module.

8. The smart granular raw material conveyance system of claim 7, wherein the second metering module includes:
a second metering hopper in which the granular material conveyed through the second vertical pipe is stored;
a second vacuum ejector configured to suck the granular material discharged from the second input module according to the suction conveyance method using a suction force and transfer the granular material to the second metering hopper; and
a second metering valve configured to meter and discharge the granular material stored in the second metering hopper in the second metered amount using the rotary valve method, and
the second metering valve includes the granular material metering valve.

9. The smart granular raw material conveyance system of claim 8, wherein the second vacuum ejector includes:
a vacuum tank unit having an inside maintained in a vacuum state by process gas or compressed air;
a vacuum head unit configured to generate the suction force as the process gas or the compressed air is input to maintain the inside of the vacuum tank unit in the vacuum state;
a granular material input unit to which the second vertical pipe is connected so that the second vertical pipe communicates with the vacuum tank unit;
a connection valve unit configured to communicate between the vacuum tank unit and the second metering hopper in an openable and closable manner; and
a control unit configured to control an operating relationship between the second input module, the 2-1 pressure conveyance module, and the vacuum head unit, and
the control unit is configured to:
operate the vacuum head unit in a state where the 2-1 pressure conveyance module is stopped so that part of the granular material passes through the second vertical pipe according to the suction conveyance method by a suction force as the granular material is discharged from the second input module; and
next, stop the vacuum head unit and simultaneously operate the 2-1 pressure conveyance module so that the rest of the granular material passes through the second vertical pipe according to the pressure conveyance method by a pressurizing force.

10. The smart granular raw material conveyance system of claim 6, wherein the second conveyance unit includes:
a second input module configured to store the granular material and meter and discharge the granular material in the second conveyance amount;
a 2-1 pressure conveyance module configured to pressurize the granular material discharged from the second input module using process gas or compressed air so that the granular material discharged from the second input module is conveyed according to the pressure conveyance method using a pressurizing force;
a second vertical pipe formed long in the height direction to form a path through which the granular material discharged from the second input module rises;
a silo module configured to suck and store the granular material discharged from the second input module or the granular material of the second vertical pipe using process gas or compressed air so that the granular material discharged from the second input module is conveyed according to the suction conveyance method using a suction force, and meter and discharge the granular material in a second metered amount using a feeding method; and
a silo pressure conveyance module configured to pressurize the granular material discharged from the silo module using process gas or compressed air so that the granular material discharged from the silo module is conveyed according to the pressure conveyance method using a pressurizing force,
the second input module includes the granular material metering valve,
based on the second vertical pipe, the 2-1 pressure conveyance module is connected to the lower end side of the second vertical pipe, and the second input module is connected to the 2-1 pressure conveyance module, and
based on the second vertical pipe, the silo module is connected to the upper end side of the second vertical pipe, and the silo pressure conveyance module is connected to the silo module.

11. The smart granular raw material conveyance system of claim 10, wherein the silo module incudes:
a granular material silo in which the granular material conveyed through the second vertical pipe is stored;
a silo vacuum ejector configured to suck the granular material discharged from the second input module according to the suction conveyance method using a suction force and transfer the granular material to the granular material silo; and
a table feeder configured to meter and discharge the granular material stored in the main silo in a second metered amount using the feeding method.

12. The smart granular raw material conveyance system of claim 11, wherein the silo vacuum ejector includes:
a vacuum tank unit having an inside maintained in a vacuum state by process gas or compressed air;
a vacuum head unit configured to generate the suction force as the process gas or the compressed air is input to maintain the inside of the vacuum tank unit in the vacuum state;
a granular material input unit to which the second vertical pipe is connected so that the second vertical pipe communicates with the vacuum tank unit;
a connection valve unit configured to communicate between the vacuum tank unit and the granular material silo in an openable and closable manner; and
a control unit configured to control an operating relationship between the second input module, the 2-1 pressure conveyance module, and the vacuum head unit, and
the control unit is configured to:
operate the vacuum head unit in a state where the 2-1 pressure conveyance module is stopped so that part of the granular material passes through the second vertical pipe according to the suction conveyance method by a suction force as the granular material is discharged from the second input module; and
next, stop the vacuum head unit and simultaneously operate the 2-1 pressure conveyance module so that the rest of the granular material passes through the second vertical pipe according to the pressure conveyance method by a pressurizing force.

13. The smart granular raw material conveyance system of claim 6, wherein the second conveyance unit includes:
a silo module configured to store the granular material and meter and discharge the granular material in the second conveyance amount using a feeding method;
a silo pressure conveyance module configured to pressurize the granular material discharged from the silo module using process gas or compressed air so that the granular material discharged from the second metering module is conveyed according to the pressure conveyance method using a pressurizing force;
a second vertical pipe formed long in the height direction to form a path through which the granular material discharged from the silo module rises;
a second metering module configured to suck and store the granular material discharged from the silo module or the granular material of the second vertical pipe using process gas or compressed air so that the granular material discharged from the silo module is conveyed according to the suction conveyance method using a suction force, and meter and discharge the granular material in a second metered amount using a rotary valve method; and
a 2-2 pressure conveyance module configured to pressurize the granular material discharged from the second metering module using process gas or compressed air so that the granular material discharged from the second metering module is conveyed according to the pressure conveyance method using a pressurizing force,
the second metering module includes the granular material metering valve,
based on the second vertical pipe, the silo pressure conveyance module is connected to the lower end side of the second vertical pipe, and the silo module is connected to the silo pressure conveyance module, and
based on the second vertical pipe, the second metering module is connected to the upper end side of the second vertical pipe, and the 2-2 pressure conveyance module is connected to the second metering module.

14. The smart granular raw material conveyance system of claim 13, wherein the second metering module includes:
a second metering hopper in which the granular material conveyed through the second vertical pipe is stored;
a second vacuum ejector configured to suck the granular material discharged from the second input module according to the suction conveyance method using a suction force and transfer the granular material to the second metering hopper; and
a second metering valve configured to meter and discharge the granular material stored in the second metering hopper in the second metered amount using the rotary valve method, and
the second metering valve includes the granular material metering valve.

15. The smart granular raw material conveyance system of claim 14, wherein the second vacuum ejector includes:
a vacuum tank unit having an inside maintained in a vacuum state by process gas or compressed air;
a vacuum head unit configured to generate the suction force as the process gas or the compressed air is input to maintain the inside of the vacuum tank unit in the vacuum state;
a granular material input unit to which the second vertical pipe is connected so that the second vertical pipe communicates with the vacuum tank unit;
a connection valve unit configured to communicate between the vacuum tank unit and the second metering hopper in an openable and closable manner; and
a control unit configured to control an operating relationship between the silo module, the silo pressure conveyance module, and the vacuum head unit, and
the control unit is configured to:
operate the vacuum head unit in a state where the silo pressure conveyance module is stopped so that part of the granular material passes through the second vertical pipe according to the suction conveyance method by a suction force as the granular material is discharged from the silo module; and
next, stop the vacuum head unit and simultaneously operate the silo pressure conveyance module so that the rest of the granular material passes through the second vertical pipe according to the pressure conveyance method by a pressurizing force.

16. The smart granular raw material conveyance system of claim 7 or 10, wherein the second input module includes:
a second input hopper in which the granular material is stored;
a second magnetic filter configured to filter magnetic foreign substances from the granular material when the granular material is put into the second input hopper;
a second mesh filter configured to filter non-magnetic foreign substances from the granular material when the granular material is put into the second input hopper; and
a second input valve configured to meter and discharge the granular material stored in the second input hopper in the second conveyance amount using the rotary valve method, and
the second input valve includes the granular material metering valve.

17. The smart granular raw material conveyance system of any one of claims 1 to 15, wherein the third conveyance unit includes:
a third input module configured to store the granular material and meter and discharge the granular material in the third conveyance amount; and
a third pressure conveyance module configured to pressurize the granular material discharged from the third input module using process gas or compressed air so that the granular material discharged from the third input module is conveyed according to the pressure conveyance method using a pressurizing force.

18. The smart granular raw material conveyance system of any one of claims 1 to 15, further comprising:
a binder conveyance unit configured to convert a binder to be mixed with the active material into a liquid solution in an amount corresponding to a binder conveyance amount and convey the converted binder; and
a solvent conveyance unit configured to convey a solvent for forming the solution by dissolving the binder in an amount corresponding to a solvent conveyance amount,
wherein the granular material is made of an active material that is a raw material of an electrode.

19. The smart granular raw material conveyance system of claim 18, wherein the binder conveyance unit includes:
a binder input module configured to store the binder and meter and discharge the binder in the binder conveyance amount;
a binder pressure conveyance module configured to pressurize the binder discharged from the binder input module using process gas or compressed air so that the binder discharged from the binder input module is conveyed according to the pressure conveyance method using a pressurizing force;
a binder mixing module configured to mix the binder transferred through the binder pressure conveyance module and the solvent transferred through the solvent conveyance unit to form the solution;
a solution conveyance module configured to pump the solution;
a solution hopper scale configured to store the solution transferred from the solution conveyance module and discharge the solution in a fixed amount corresponding to a conveyance amount of the solution; and
a solution supply pump configured to pump the solution of the solution hopper scale in an amount corresponding to the conveyance amount of the solution.

20. The smart granular raw material conveyance system of claim 18, wherein the solvent conveyance unit includes:
a solvent tank in which the solvent is stored;
a solvent pumping module configured to pump the solvent stored in the solvent tank;
a mixing adjusting module configured to adjust the solvent to be mixed with the binder; and
a slurry adjusting module configured to adjust the solvent to be mixed in the slurry.

21. The smart granular raw material conveyance system of claim 18, further comprising at least one of:
a conductive material conveyance unit configured to convey a conductive material to be mixed with a slurry for forming the electrode in an amount corresponding to a conductive material conveyance amount; and
a dispersant conveyance unit configured to convey a dispersant to be mixed with the slurry for forming the electrode in an amount corresponding to a dispersant conveyance amount.

22. The smart granular raw material conveyance system of claim 21, wherein
the conductive material conveyance unit includes:
a conductive material hopper scale in which the conductive material is stored; and
a conductive material supply pump configured to pump the conductive material stored in the conductive material hopper scale in a fixed amount corresponding to the conductive material conveyance amount.

23. The smart granular raw material conveyance system of claim 21, wherein the dispersant conveyance unit includes:
a dispersant hopper scale in which the dispersant is stored; and
a dispersant supply pump configured to pump the dispersant stored in the dispersant hopper scale in a fixed amount corresponding to the dispersant conveyance amount.

24. The smart granular raw material conveyance system of claim 18, further comprising a mixing unit configured to mix the granular material transferred through the granular material conveyance unit, the solution transferred through the binder conveyance unit, and the solvent transferred through the solvent conveyance unit.

25. The smart granular raw material conveyance system of any one of claims 1 to 15, wherein the granular material metering valve further includes a power generation module disposed to be coaxial or parallel with, or intersect the first virtual shaft and configured to generate a rotational force to rotate the distribution module.

26. The smart granular raw material conveyance system of claim 25, wherein the granular material metering valve further includes at least a rotation sensing module of:
the rotation sensing module disposed to be coaxial with the first virtual shaft and configured to detect a position of the unit discharge groove in the metering housing; and
a speed control module configured to adjust a rotational force generated from the power generation module according to the position of the unit discharge groove detected by the rotation sensing module.

27. The smart granular raw material conveyance system of claim 26, wherein the rotation sensing module includes:
a sensing paddle rotatably coupled to the metering housing via a paddle shaft coaxial with the first virtual shaft and rotatable with the first virtual shaft; and
a speed sensor configured to detect the sensing paddle,
the sensing paddle includes:
a paddle body coupled to the paddle shaft; and
sensing blades arranged on the paddle body at equal intervals along an outer peripheral surface of the paddle body to correspond to the unit discharge grooves, and
the speed sensor detects the sensing blade.

28. The smart granular raw material conveyance system of any one of claims 1 to 15, wherein the distribution module includes:
a cylindrical distribution body through which a distribution hole is formed coaxially with the first virtual shaft; and
a plurality of partition blades formed to protrude from an outer peripheral surface of the distribution body in a normal direction of the distribution body so that two unit discharge grooves adjacent to each other are partitioned.

29. The smart granular raw material conveyance system of claim 28, wherein a scraper that is supported in close contact with or in contact with an inner wall of the metering housing is provided at an end of the partition blade.

30. A method of conveying the granular material using the smart granular raw material conveyance system of claim 1, the method comprising:
a granular material conveyance step comprising at least one of:
a first conveyance step of conveying a granular material in an amount corresponding to a first conveyance amount;
a second conveyance step of conveying the granular material in an amount corresponding to a second conveyance amount equal to or different from the first conveyance amount; and
a third conveyance step of conveying the granular material in an amount corresponding to a third conveyance amount less than the first conveyance amount or the second conveyance amount,
wherein the first conveyance step comprises:
a first suction conveyance step of, when the granular material of the first conveyance unit rises in a first vertical pipe formed long in the height direction, passing part of the granular material of the first conveyance amount in the first vertical pipe according to a suction conveyance method using a suction force acting on an upper end side of the first vertical pipe; and
a first pressure conveyance step of, after going through the first suction conveyance step, passing a remaining granular material of the first conveyance amount in the first vertical pipe according to a pressure conveyance method using a pressurizing force acting on a lower end side of the first vertical pipe.

31. A method of conveying the granular material using the smart granular raw material conveyance system of claim 6, the method comprising a granular material conveyance step comprising at least one of:
a first conveyance step of conveying a granular material in an amount corresponding to a first conveyance amount;
a second conveyance step of conveying the granular material in an amount corresponding to a second conveyance amount equal to or different from the first conveyance amount; and
a third conveyance step of conveying the granular material in an amount corresponding to a third conveyance amount less than the first conveyance amount or the second conveyance amount,
wherein the second conveyance step comprises:
a second suction conveyance step of, when the granular material of the second conveyance unit rises in a second vertical pipe formed long in the height direction, passing part of the granular material of the second conveyance amount in the second vertical pipe according to a suction conveyance method using a suction force acting on an upper end side of the second vertical pipe; and
a second pressure conveyance step of, after going through the second suction conveyance step, passing a remaining granular material of the second conveyance amount through the second vertical pipe according to a pressure conveyance method using a pressurizing force acting on a lower end side of the second vertical pipe.

32. The method of claim 30 or 31, wherein the third conveyance step comprises:
a third input step of metering and discharging the granular material stored in the third input module in the third conveyance amount; and
a third pressure conveyance step of pressurizing the granular material discharged from the third input module using process gas or compressed air so that the granular material discharged through the third input step is conveyed according to the pressure conveyance method using a pressurizing force.

33. The method of claim 30 or 31, further comprising:
a binder conveyance step of converting a binder to be mixed with the active material into a liquid solution in an amount corresponding to a binder conveyance amount and conveying the converted binder; and
a solvent conveyance step of conveying a solvent for forming the solution by dissolving the binder in an amount corresponding to a solvent conveyance amount;
wherein the granular material is made of an active material that is a raw material of an electrode.

34. The method of claim 33, further comprising at least one of:
a conductive material conveyance step of conveying a conductive material to be mixed with a slurry for forming the electrode in an amount corresponding to a conductive material conveyance amount; and
a dispersant conveyance step of conveying a dispersant to be mixed with the slurry for forming the electrode in an amount corresponding to a dispersant conveyance amount.

35. The method of claim 33, further comprising a mixing step of mixing the granular material transferred through the granular material conveyance step, the solution transferred through the binder conveyance step, and the solvent transferred through the solvent conveyance step to form the slurry for forming the electrode.
